# EUROPEAN PATENT APPLICATION

(11) **EP 4 838 761 A1**
(43) Date of publication of application: **11.11.2026**
(21) Application number: 26175891.6
(22) Date of filing: 30.04.2026
(51) Int. Cl.: H02K 3/28, H02K 3/12

(54) **FLAT WIRE MOTOR, POWERTRAIN, AND VEHICLE**

(30) Priority: 06.05.2025 CN 202510579259
(71) Applicant: HUAWEI TECHNOLOGIES CO., LTD., Shenzhen 518129 (CN)
(72) Inventor: LUO, Dong, Shenzhen, 518129 (CN); ZHANG, Bowen, Shenzhen, 518129 (CN); LAN, Hua, Shenzhen, 518129 (CN)
(74) Representative: Gill Jennings & Every LLP

(57) **Abstract**

Embodiments of this application relate to the field of flat wire motor technologies, and provide a flat wire motor, a powertrain, and a vehicle, to resolve a problem that NVH performance of the flat wire motor is relatively poor. In the flat wire motor, each group of flat wires is configured to transmit a same-phase alternating current, and two adjacent groups of flat wires in a circumferential direction of a motor stator are respectively configured to transmit alternating currents of different phases. Each group of flat wires includes a first layer of flat wires and a second layer of flat wires that are adjacently arranged in a radial direction of the motor stator, the first layer of flat wires includes two flat wires, the two flat wires of each first layer of flat wires are arranged at a same layer of two adjacent stator slots in a one-to-one manner, the second layer of flat wires includes one flat wire, and the one flat wire of the second layer of flat wires in each group of flat wires and one of the flat wires of the first layer of flat wires in the same group of flat wires are located in a same stator slot. In this way, a number of slots per pole per phase is 1.5, an end length of a stator winding is reduced, winding distribution is more dispersed, and a harmonic content of an air-gap magnetic field is relatively low. This helps improve NVH performance of the flat wire motor.

## Description

### TECHNICAL FIELD

This application relates to the field of flat wire motor technologies, and in particular, to a flat wire motor, a powertrain, and a vehicle.

### BACKGROUND

A flat wire motor is a motor that uses a flat rectangular wire as a stator winding. Compared with a conventional motor using a circular wire, the flat wire motor has a high copper filling rate and higher power density, efficiency, and heat dissipation performance, and is widely used in fields of new energy vehicles, industrial equipment, and the like.

The stator winding of the flat wire motor includes an integral slot winding and a fractional slot winding. In the field of new energy vehicles, a flat wire motor with an integral slot winding is used in scenarios such as drive motors and generators. A flat wire motor with a fractional slot winding is used in scenarios such as disc motors, hub motors, and extended-range generators. An existing flat wire motor with a fractional slot winding has problems of a large number of wire types and a complex structure, and is prone to problems of uneven conductor distribution and a circulating current between branches, resulting in poor NVH (Noise, Vibration, and Harshness, noise, vibration, and harshness) performance of the fractional slot winding.

### SUMMARY

This application provides a flat wire motor, a powertrain, and a vehicle, to improve NVH performance of the flat wire motor.

To achieve the foregoing objective, the following technical solutions are used in this application.

According to a first aspect of this application, a flat wire motor is provided. A motor stator of the flat wire motor includes a plurality of stator slots, the plurality of stator slots are arranged at intervals in a circumferential direction of the motor stator, each stator slot is configured to accommodate a plurality of flat wires, the plurality of flat wires in each stator slot are sequentially arranged in a layered manner in a radial direction of the motor stator, and flat wires in the plurality of stator slots are arranged into a plurality of circles of flat wires in the radial direction of the motor stator.

Each circle of flat wires includes a plurality of groups of flat wires sequentially arranged in the circumferential direction of the motor stator, each group of flat wires is configured to transmit a same-phase alternating current, and two adjacent groups of flat wires in the circumferential direction of the motor stator are respectively configured to transmit alternating currents of different phases.

Each group of flat wires includes a first layer of flat wires and a second layer of flat wires that are adjacently arranged in the radial direction of the motor stator, the first layer of flat wires includes two flat wires, the two flat wires of each first layer of flat wires are arranged at a same layer of two adjacent stator slots in a one-to-one manner, the second layer of flat wires includes one flat wire, and the one flat wire of the second layer of flat wires in each group of flat wires and one of the flat wires of the first layer of flat wires in the same group of flat wires are located in a same stator slot.

In the flat wire motor provided in this application, the flat wires in the plurality of stator slots are connected to form a stator winding. Each circle of flat wires includes a plurality of groups of flat wires sequentially arranged in the circumferential direction of the motor stator, each group of flat wires is configured to transmit a same-phase alternating current, and two adjacent groups of flat wires in the circumferential direction of the motor stator are respectively configured to transmit alternating currents of different phases. Therefore, each group of flat wires of each circle of flat wires is located in one phase spread of one phase winding of the stator winding.

Each group of flat wires includes a first layer of flat wires and a second layer of flat wires, the first layer of flat wires includes two flat wires, the second layer of flat wires includes one flat wire, and one flat wire of a second layer of flat wires and one of flat wires of a first layer of flat wires in a same group of flat wires are located in a same stator slot. Therefore, each group of flat wires in the stator winding has a same number of flat wires, and each phase winding in the stator winding occupies 1.5 stator slots per magnetic pole, that is, a number of slots per pole per phase of the stator winding is 1.5.

In comparison with a stator winding whose number of slots per pole per phase is 2, the number of slots per pole per phase of the stator winding in the flat wire motor is set to 1.5, so that an end portion length of the stator winding is reduced, and costs of the stator winding are reduced. In comparison with the stator winding whose number of slots per pole per phase is 1, the number of slots per pole per phase of the stator winding in the flat wire motor is set to 1.5, so that winding distribution is more dispersed, and harmonic content of the winding is relatively low. This helps improve NVH performance of the flat wire motor.

In an implementation, two flat wires of a first layer of flat wires in each group of flat wires in the plurality of circles of flat wires are connected to two flat wires of a first layer of flat wires in another group of flat wires in the plurality of circles of flat wires through two cross-layer connection segments in a one-to-one manner. The two cross-layer connection segments are located at an axial end of the motor stator, and two flat wires connected through each cross-layer connection segment are respectively arranged at different layers.

Because the two flat wires connected through each cross-layer connection segment are respectively arranged at different layers, the two first layers of flat wires in the two groups of flat wires respectively corresponding to the two flat wires connected through each cross-layer connection segment are located at different layers. This facilitates even distribution of a plurality of groups of flat wires of each phase winding in the stator winding in the circumferential direction of the motor stator, facilitates more orderly wiring of the stator winding, and facilitates structure symmetry of the stator winding, thereby improving NVH performance of flat wire motor.

In an implementation, two flat wires of the first layer of flat wires in at least a part of the plurality of groups of flat wires in the plurality of circles of flat wires are connected to two flat wires of a first layer of flat wires in another group of flat wires in the plurality of circles of flat wires through two cross-layer connection segments with a same length in a one-to-one manner.

In the flat wire motor provided in this application, two cross-layer connection segments with a same length cross a same number of stator slots.

In some embodiments, two flat wires of a first layer of flat wires in some of a plurality of groups of flat wires in the plurality of circles of flat wires are connected to two flat wires of a first layer of flat wires in another group of flat wires in the plurality of circles of flat wires through two cross-layer connection segments with a same length in a one-to-one manner, to reduce wire types of the stator winding and simplify a structure of the stator winding.

In some embodiments, two flat wires of a first layer of flat wires in each group of flat wires in the plurality of circles of flat wires are connected to two flat wires of a first layer of flat wires in another group of flat wires in the plurality of circles of flat wires through two cross-layer connection segments with a same length in a one-to-one manner, to reduce flat wire types of the stator winding and simplify a structure of the stator winding.

In an implementation, cross-layer connection segments used to connect any two first layers of flat wires in a same circle of flat wires cross a same number of stator slots.

In the flat wire motor provided in this application, in a same circle of flat wires, cross-layer connection segments used to connect two first layers of flat wires have a same length. This facilitates even distribution of a plurality of groups of flat wires in the stator winding, facilitates more orderly wiring of the stator winding, facilitates structure symmetry of the stator winding, and avoids a circulating current between branches, thereby improving NVH performance of the flat wire motor. In addition, this helps reduce wire types of the stator winding, and simplify a structure of the stator winding or the flat wire motor, to simplify processing and assembly processes, and reduce manufacturing costs and assembly costs.

In an implementation, cross-layer connection segments used to connect two first layers of flat wires in two adjacent circles of flat wires cross a same number of stator slots.

In the flat wire motor provided in this application, one first layer of flat wires of one circle of flat wires in two adjacent circles of flat wires is connected to one first layer of flat wires of the other one circle of flat wires in the two adjacent circles of flat wires through a cross-layer connection segment. Lengths of cross-layer connection segments used to connect two first layers of flat wires in two adjacent circles of flat wires in the stator winding are the same.

In some embodiments, cross-layer connection segments for connecting two first layers of flat wires in two same circles of flat wires cross a same number of stator slots. This helps reduce wire types of the stator winding, and simplify a structure of the stator winding or the flat wire motor, to simplify processing and assembly processes, and reduce manufacturing costs and assembly costs. In addition, this facilitates more orderly wiring of the stator winding, facilitates structure symmetry of the stator winding, and avoids a circulating current between branches.

In an implementation, a first layer of flat wires of one of a plurality of groups of flat wires configured to transmit a same-phase alternating current in each circle of flat wires is connected to first layers of flat wires of two groups of flat wires through two cross-layer connection segments with different lengths in a one-to-one manner, and the two groups of flat wires are respectively located in two adjacent circles of flat wires.

In the flat wire motor provided in this application, in each circle of flat wires, one flat wire of a first layer of flat wires of one of a plurality of groups of flat wires configured to transmit a same-phase alternating current is connected to one flat wire of a first layer of flat wires of one group of flat wires through a cross-layer connection segment. In each circle of flat wires, another flat wire of a first layer of flat wires of one of a plurality of groups of flat wires configured to transmit a same-phase alternating current is connected to one flat wire of a first layer of flat wires of another group of flat wires through another cross-layer connection segment. The two cross-layer connection segments have different lengths, that is, the two cross-layer connection segments have different wire types, so that connections between flat wires have different spans. This helps form a short-pitch winding, thereby reducing a harmonic winding factor and improving NVH performance of the flat wire motor.

In the flat wire motor provided in this application, two groups of flat wires are respectively located in two adjacent circles of flat wires, one of the two groups of flat wires is located in one of the two adjacent circles of flat wires, and the other one of the two groups of flat wires is located in the other one of the two adjacent circles of flat wires.

In some embodiments, one of the two cross-layer connection segments with different lengths is configured to connect first layers of flat wires of two groups of flat wires in a same circle of flat wires, and the other one of the two cross-layer connection segments with different lengths is configured to connect first layers of flat wires of two groups of flat wires in two adjacent circles of flat wires. Through the two cross-layer connection segments with different lengths, connections between flat wires have different spans. This helps form a short-pitch winding, thereby reducing a harmonic winding factor and improving NVH performance of the flat wire motor.

In an implementation, a difference between numbers of stator slots crossed by two cross-layer connection segments with different lengths is 1.

The numbers of stator slots crossed by the two cross-layer connection segments with different lengths differ by 1, so that connections between flat wires have different spans. This helps form a short-pitch winding, thereby reducing a harmonic winding factor and improving NVH performance of the flat wire motor.

In an implementation, a second layer of flat wires of each group of flat wires in the plurality of circles of flat wires is connected to a second layer of flat wires of another group of flat wires in the plurality of circles of flat wires through one cross-layer connection segment, and the two second layers of flat wires connected through the cross-layer connection segment are respectively arranged at different layers. The first layer of flat wires and the second layer of flat wires in each group of flat wires in the plurality of circles of flat wires are connected to corresponding layers of flat wires in different groups of flat wires.

The two second layers of flat wires connected through the cross-layer connection segment are respectively arranged at different layers. This facilitates even distribution of a plurality of groups of flat wires of each phase winding in the stator winding in the circumferential direction of the motor stator, so that the stator winding is symmetrically distributed, and NVH performance of the flat wire motor is improved.

The first layer of flat wires and the second layer of flat wires in each group of flat wires are connected to corresponding layers of flat wires in different groups of flat wires, to avoid crossing between cross-layer connection segments for connecting the first layer of flat wires and the second layer of flat wires in each group of flat wires, thereby reducing a risk of a circulating current between branches of the stator winding, and simplifying a structure of the stator winding. This helps reduce a size of the stator winding, to reduce space occupied by the flat wire motor.

In an implementation, numbers of stator slots crossed by cross-layer connection segments connected to a second layer of flat wires of each group of flat wires in the plurality of circles of flat wires are the same.

In the flat wire motor provided in this application, in the plurality of circles of flat wires, cross-layer connection segments used to connect two second layers of flat wires have a same length. This facilitates even distribution of a plurality of groups of flat wires in the stator winding, facilitates more orderly wiring of the stator winding, facilitates structure symmetry of the stator winding, and avoids a circulating current between branches, thereby improving NVH performance of the flat wire motor. In addition, this helps reduce wire types of the stator winding, and simplify a structure of the stator winding or the flat wire motor, to simplify processing and assembly processes, and reduce manufacturing costs and assembly costs.

In an implementation, the number of stator slots crossed by the cross-layer connection segment connected to the second layer of flat wires in each group of flat wires in each circle of flat wires is the same as a number of stator slots crossed by the cross-layer connection segment connected to the first layer of flat wires in each group of flat wires.

In the flat wire motor provided in this application, in a same circle of flat wires, a number of stator slots between two first layers of flat wires of two adjacent groups of flat wires is the same as a number of stator slots between two first layers of flat wires of two adjacent groups of flat wires, and cross-layer connection segments used to connect two second layers of flat wires have a same length and are of a same wire type. This facilitates even distribution of a plurality of groups of flat wires in the stator winding, facilitates more orderly wiring of the stator winding, facilitates structure symmetry of the stator winding, and avoids a circulating current between branches, thereby improving NVH performance of the flat wire motor. In addition, this helps reduce wire types of the stator winding, and simplify a structure of the stator winding or the flat wire motor, to simplify processing and assembly processes, and reduce manufacturing costs and assembly costs.

In an implementation, a difference between the number of stator slots crossed by the cross-layer connection segment connected to the second layer of flat wires in each group of flat wires in each circle of flat wires and a number of stator slots crossed by the cross-layer connection segment connected to any flat wire of the first layer of flat wires in one group of flat wires in each circle of flat wires is 1.

Connections between flat wires in a same circle of flat wires have different spans. This helps form a short-pitch winding, thereby reducing a harmonic winding factor and improving NVH performance of the flat wire motor.

In an implementation, one flat wire of the first layer of flat wires in one of the plurality of groups of flat wires configured to transmit a same-phase alternating current in one circle of flat wires located at at least one end in an arrangement direction of the plurality of circles of flat wires is connected to the second layer of flat wires in another group of flat wires in the same circle of flat wires through a same-layer connection segment.

The same-layer connection segment is used to implement traversal connection between flat wires of a same phase winding, so that the stator winding maintains electromotive force balance, and a risk of a circulating current between branches is reduced.

In some embodiments, the same-layer connection segment is located at a crown end of the stator winding in the motor stator.

In some other embodiments, the same-layer connection segment is located at a welding end of the stator winding in the motor stator.

In an implementation, the plurality of circles of flat wires include a first circle of flat wires and a second circle of flat wires. A distance between the first circle of flat wires and an axis of the motor stator is greater than a distance between another circle of flat wires and the axis of the motor stator. A distance between the second circle of flat wires and the axis of the motor stator is less than a distance between another circle of flat wires and the axis of the motor stator.

The first circle of flat wires is a circle of flat wires that is in the plurality of circles of flat wires and that is farthest away from the motor rotor. The second circle of flat wires is a circle of flat wires that is in the plurality of circles of flat wires and that is closest to the motor rotor.

A difference between a number of stator slots crossed by a same-layer connection segment for connecting the first layer of flat wires and the second layer of flat wires in the first circle of flat wires and a number of stator slots crossed by a same-layer connection segment for connecting the first layer of flat wires and the second layer of flat wires in the second circle of flat wires is 1.

The difference between the number of stator slots crossed by the same-layer connection segment in the first circle of flat wires and the number of stator slots crossed by the same-layer connection segment in the second circle of flat wires is 1, so that connections between flat wires of the stator winding have different spans. This helps form a short-pitch winding, thereby reducing a harmonic winding factor and improving NVH performance of the flat wire motor. In addition, traversal connection between flat wires of a same phase winding is implemented, so that the stator winding maintains electromotive force balance, and a risk of a circulating current between branches is reduced.

In some embodiments, both a same-layer connection segment of the first circle of flat wires and a same-layer connection segment of the second circle of flat wires are located at the crown end of the stator winding in the motor stator.

In some embodiments, both a same-layer connection segment of the first circle of flat wires and a same-layer connection segment of the second circle of flat wires are located at a welding end of the stator winding in the motor stator.

According to a second aspect of this application, a powertrain is provided. The powertrain includes a reducer and the foregoing flat wire motor, and the flat wire motor is in transmission connection to the reducer.

The flat wire motor is configured to convert electric energy into rotating mechanical energy, and output torque to the reducer. The reducer is configured to reduce a rotational speed, increase the torque, and transfer power to a transmission mechanism, to transfer the power to the wheels, so as to drive the wheels to rotate.

In addition, the powertrain provided in this application includes the foregoing flat wire motor. Therefore, the powertrain provided in this application and the flat wire motor in the foregoing technical solution resolve the same technical problem, and have the same technical effects. Details are not described herein again.

According to a third aspect of this application, a vehicle is provided. The vehicle includes wheels and the foregoing powertrain, and the powertrain is configured to drive the wheels.

The powertrain is configured to convert electric energy into mechanical energy and drive the wheels to rotate, so that the vehicle travels. In addition, the powertrain provided in this application includes the foregoing powertrain. Therefore, the vehicle provided in this application and the powertrain in the foregoing technical solution resolve the same technical problem, and have the same technical effects. Details are not described herein again.

### BRIEF DESCRIPTION OF DRAWINGS

FIG. 1 is a diagram of a structure of a vehicle according to an embodiment of this application;
FIG. 2 is a diagram of a structure of a powertrain according to an embodiment of this application;
FIG. 3 is a partial exploded view of a flat wire motor according to an embodiment of this application;
FIG. 4 is a diagram of a partial structure of a motor stator according to an embodiment of this application;
FIG. 5 is a diagram 1 of an end portion connection of a three-phase winding according to an embodiment of this application;
FIG. 6 is a diagram 2 of an end portion connection of a three-phase winding according to an embodiment of this application;
FIG. 7 is a diagram 1 of phase spread distribution of a three-phase winding according to an embodiment of this application;
FIG. 8 is a diagram 2 of phase spread distribution of a three-phase winding according to an embodiment of this application;
FIG. 9 is a connection diagram 1 of the U-phase winding in FIG. 7;
FIG. 10 is a connection diagram 2 of the U-phase winding in FIG. 7;
FIG. 11 is a connection diagram 3 of the U-phase winding in FIG. 7;
FIG. 12 is a connection diagram 4 of the U-phase winding in FIG. 7;
FIG. 13 is a connection diagram 1 of the U-phase winding in FIG. 8;
FIG. 14 is a connection diagram 2 of the U-phase winding in FIG. 8;
FIG. 15 is a connection diagram 3 of the U-phase winding in FIG. 8;
FIG. 16 is a connection diagram 4 of the U-phase winding in FIG. 8;
FIG. 17 is a diagram of a structure of a crown end of a motor stator according to an embodiment of this application; and
FIG. 18 is a diagram of a structure of a welding end of a motor stator according to an embodiment of this application.

### Reference numerals:

1000: vehicle; 100: powertrain; 200: wheel; 300: transmission mechanism; 10: flat wire motor; 20: reducer; 101: motor stator; 102: motor rotor;
1: stator core; 11: stator slot; 111: slot opening; 12: mounting shaft hole;
2: stator winding; 21: flat wire; 211: first flat wire; 212: second flat wire; 213: third flat wire;
01: first group of flat wires; 02: second group of flat wires; 03: third group of flat wires; 04: fourth group of flat wires; 05: fifth group of flat wires; 06: sixth group of flat wires;
011: first layer of flat wires; 012: second layer of flat wires;
31: first circle of flat wires; 32: second circle of flat wires; 33: third circle of flat wires; 34: fourth circle of flat wires;
4: cross-layer connection segment;
41: cross-layer cross-wire segment; 411: first cross-wire segment; 412: second cross-wire segment; 413: third cross-wire segment; 414: fourth cross-wire segment; 415: fifth cross-wire segment; 416: sixth cross-wire segment; 417: seventh cross-wire segment; 418: eighth cross-wire segment;
42: cross-layer welding segment; 421: first welding segment; 422: second welding segment; 423: third welding segment; 424: fourth welding segment; 425: fifth welding segment; 426: sixth welding segment; 427: seventh welding segment; 428: eighth welding segment;
5: same-layer connection segment; 51: first same-layer cross-wire segment; 52: second same-layer cross-wire segment; 53: first same-layer welding segment; 54: second same-layer welding segment;
61: crown end; 62: welding end; and
71: lead-in wire; 72: lead-out wire.

### DESCRIPTION OF EMBODIMENTS

The following describes the technical solutions in embodiments of this application with reference to the accompanying drawings in embodiments of this application. It is clear that the described embodiments are merely some embodiments of this application.

In the accompanying drawings of embodiments of this application, entity structures such as components and assemblies are represented by using guide lines, and hollow-out structures such as openings, holes, space, and cavities are represented by using guide lines with arrows.

For ease of understanding, English abbreviations and technical terms used in embodiments of this application are first explained and described below.

NVH: Noise, Vibration, and Harshness.

Motor stator: is a stationary part of a motor, and is configured to generate a rotating magnetic field.

Motor rotor: is a rotating component in a motor, and is configured to implement conversion between electric energy and mechanical energy.

Number of phases: is a number of phases of an alternating current power supply that independently supplies power in a stator winding.

Number of poles: is a number of magnetic poles of a motor. The magnetic poles are classified into N poles and S poles. One N pole and one S pole are referred to as a pair of magnetic poles (a number of magnetic pole pairs is 1). When the number of pole pairs of the motor is 1, 2, 3, and 4, the corresponding number of poles is 2, 4, 6, and 8.

Number of slots per pole per phase: is a number of stator slots occupied by each phase winding with respect to each magnetic pole, and is represented by q. $q = \frac{z}{2 pm}$*,* where Z is a total number of stator slots, P is a number of magnetic pole pairs, p is a positive integer, and m is a number of phases.

Integral slot winding: means that a number q of slots per pole per phase in a stator winding is an integer.

Fractional slot winding: means that a number q of slots per pole per phase in a stator winding is a fraction.

Pole pitch: is a distance occupied by each magnetic pole on a circumferential surface. In an alternating current motor, the pole pitch is a slot pitch occupied by each magnetic pole along an inner circle of a stator core, and is represented by a number of stator slots. The pole pitch is represented by f, and $f = \frac{z}{2 p}$, where Z is a total number of stator slots, and P is a number of magnetic pole pairs.

Pitch: is also referred to as a span of a flat wire, and refers to a number of stator slots occupied by two active sides of a single flat wire. Using pitch y=6 as an example, the pitch being 6 means that the two active sides of the flat wire are separated by six slots, and the two active sides are respectively embedded in a 1^{st} slot and a 7^{th} slot.

Slot pitch angle: is a mechanical angle between two adjacent stator slots on a stator core.

Slot electrical angle: is an electrical angle between two adjacent stator slots on a stator core.

Full-pitch winding: A pitch of a flat wire in a stator winding is equal to a pole pitch, that is, a number of stator slots crossed by two active sides of the flat wire is equal to a number of slots occupied by one magnetic pole.

Short-pitch winding: A pitch of a flat wire in a stator winding is less than a pole pitch, that is, a number of stator slots crossed by two active sides of the flat wire is less than a number of slots occupied by one magnetic pole.

Busbar: is a connection bar located at an end portion of a stator winding and configured to connect a neutral line, a lead, a jumper wire, and the like at the end portion of the stator winding. In some embodiments, the busbar is an integrated injection-molding mechanical part, and is referred to as an integrated injection-molding busbar. Compared with a conventional wiring method, the busbar has significant advantages such as a convenient design, low impedance, a strong anti-interference capability, high reliability, high space utilization, and quick assembly.

Upin hairpin wire: means that a flat wire is preformed into a hairpin shape, that is, a shape of the letter "U". The Upin hairpin wire is inserted into a stator slot in an axial direction of a motor stator. After processes such as twisting and welding, Upin hairpin wires independent of each other are connected to form a stator winding.

Ipin hairpin wire: has a shape of the letter "I". The wire is directly inserted, and then double-sided welding is performed.

Crown end: In an axial direction of a motor stator, an end of a stator winding without a solder joint is like a crown. The end of the stator winding without a solder joint is referred to as the crown end.

Welding end: In an axial direction of a motor stator, an end that is of a stator winding and that is away from a crown end connects, through welding, Upin hairpin wires independent of each other. An end of the stator winding with a solder joint is referred to as the welding end.

Phase spread: indicates a number of stator slots consecutively occupied by a same-phase winding per pole.

Unit motor: indicates a minimum unit that represents slot electromotive force phase distribution information per pair of magnetic poles.

A flat wire motor is a motor that uses a flat rectangular wire as a stator winding. Compared with a conventional motor using a circular wire, the flat wire motor has a high copper filling rate and higher power density, efficiency, and heat dissipation performance, and is widely used in the field of new energy vehicles. At present, a stator winding of a flat wire motor is usually an integral slot winding in the new energy vehicle. In some embodiments, a stator winding of the flat wire motor is usually a stator winding whose number q of slots per pole per phase is 1 or a stator winding whose number q of slots per pole per phase is 2. The stator winding whose number q of slots per pole per phase is 2 has problems of a long end portion of the stator winding and high costs. Compared with the stator winding whose number q of slots per pole per phase is 2, the stator winding whose number q of slots per pole per phase is 1 has a reduced end portion length, but the stator winding whose number q of slots per pole per phase is 1 has high harmonic content and poor NVH performance.

In current flat wire motors, neither a flat wire motor whose number q of slots per pole per phase is 2 nor a flat wire motor whose number q of slots per pole per phase is 1 can meet a requirement for reducing an end portion length of a stator winding, reducing harmonic content, and improving NVH performance. To resolve these problems, this application provides a flat wire motor, a powertrain, and a vehicle. A number q of slots per pole per phase of the flat wire motor is 1.5.

In comparison with a stator winding whose number q of slots per pole per phase is 2, the number q of slots per pole per phase of a stator winding in the flat wire motor is set to 1.5, so that an end portion length of the stator winding is reduced, and costs of the stator winding are reduced. In comparison with the stator winding whose number q of slots per pole per phase is 1, the number q of slots per pole per phase of a stator winding in the flat wire motor is set to 1.5, so that winding distribution is more dispersed, and harmonic content of the winding is relatively low. This helps improve NVH performance of the flat wire motor.

The following describes technical solutions in embodiments of this application with reference to the accompanying drawings in embodiments of this application.

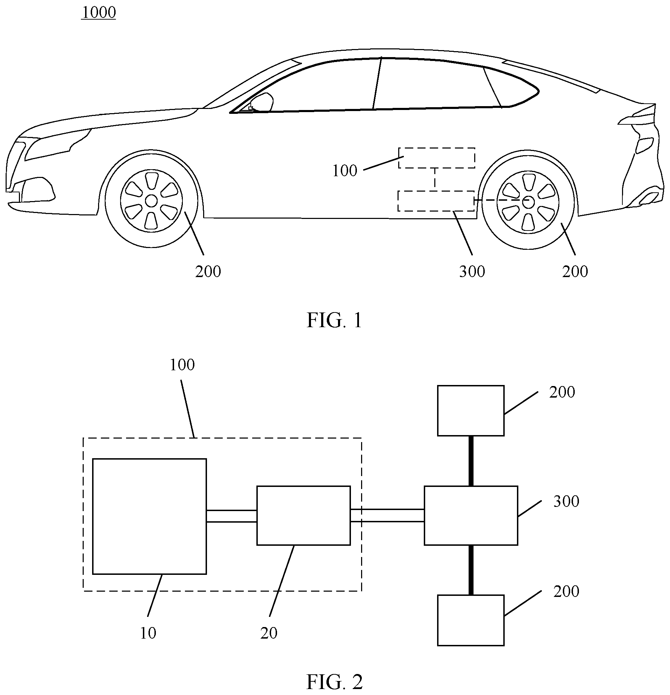

FIG. 1 is a diagram of a structure of a vehicle according to an embodiment of this application. Refer to FIG. 1. A vehicle 1000 includes wheels 200 and a powertrain 100. The powertrain 100 is configured to drive the vehicle 1000 to rotate, so that the vehicle 1000 travels.

Refer to FIG. 1. The vehicle 1000 further includes a transmission mechanism 300, and the transmission mechanism 300 is used for transmission connection between the powertrain 100 and the wheels 200. The powertrain 100 is configured to convert electric energy into mechanical energy, and drive, through the transmission mechanism 300, the wheels 200 to rotate, so that the vehicle 1000 travels.

In the embodiment shown in FIG. 1, the powertrain 100 is configured to drive rear wheels (wheels 200 close to a rear side of the vehicle) of the vehicle 1000 to rotate, and front wheels of the vehicle 1000 are configured to implement steering. The vehicle 1000 responds more sensitively during steering, and is more stable during turning.

In some other embodiments, the powertrain 100 is configured to drive the front wheels (wheels 200 close to a front side of the vehicle) of the vehicle 1000 to rotate, and the front wheels are configured to implement driving and steering. The front-wheel driving manner has a simple structure, a small number of parts, and a lighter weight, so that a power loss is reduced, transmission efficiency is higher, and both fuel consumption and costs are relatively low.

FIG. 2 is a diagram of a structure of a powertrain according to an embodiment of this application. Refer to FIG. 2. A structure shown in a dashed-line box is the powertrain 100. The powertrain 100 includes a flat wire motor 10 and a reducer 20. The flat wire motor 10 is in transmission connection to the reducer 20. The flat wire motor 10 is configured to convert electric energy into rotating mechanical energy, and output torque to the reducer 20. The reducer 20 includes a gear set (not shown in the figure). The reducer 20 reduces a rotational speed and increases torque by using the gear set, and transfers power to the transmission mechanism 300, to transfer the power to the wheels 200, so as to drive the wheels 200 to rotate.

There are a plurality of forms of flat wire motors 10. In some embodiments, the flat wire motor 10 is a permanent magnet synchronous motor. In some embodiments, the flat wire motor 10 is an electrically excited synchronous motor. In some embodiments, the flat wire motor 10 is an asynchronous motor.

The flat wire motor 10 provided in embodiments of this application is not only used in the field of the vehicle 1000, but also may be used in another field based on an actual requirement. In some embodiments, the flat wire motor 10 is used in an electric propulsion motor in the aerospace field. In some other embodiments, the flat wire motor 10 is used in a traction motor in the high-speed railway field. In some other embodiments, the flat wire motor 10 is used in an electric propulsion motor in the ship field.

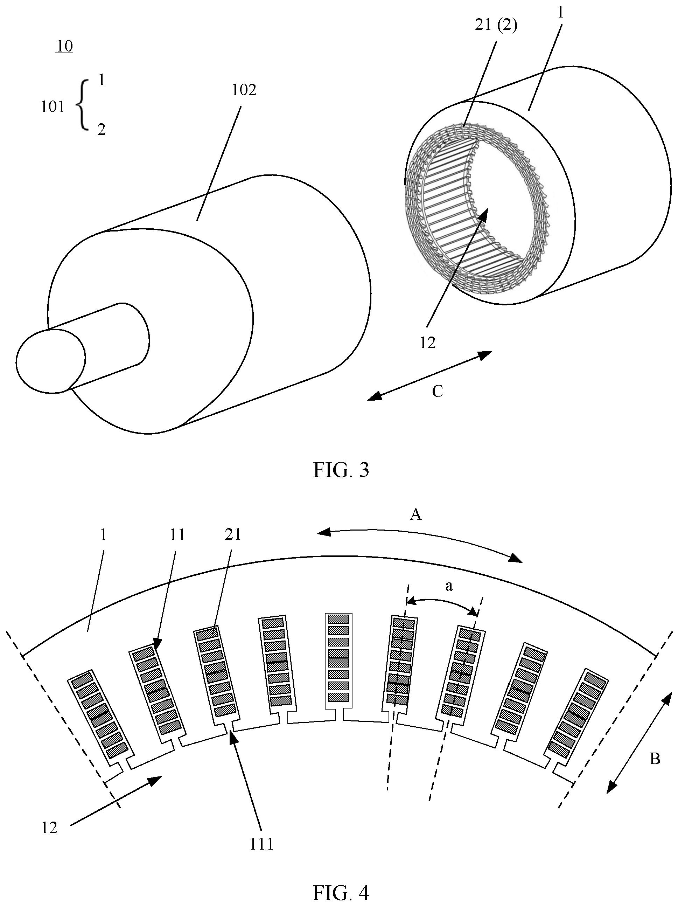

FIG. 3 is a partial exploded view of a flat wire motor according to an embodiment of this application. Refer to FIG. 3. The flat wire motor 10 includes a motor stator 101 and a motor rotor 102. The motor stator 101 and the motor rotor 102 operate cooperatively to implement conversion between electric energy and mechanical energy. The motor stator 101 includes a stator core 1 and a stator winding 2, and the stator winding 2 is mounted on the stator core 1.

After the stator winding 2 is powered on, a rotating magnetic field is generated, and the motor rotor 102 cuts the magnetic field to generate an induced current. The induced current interacts with the rotating magnetic field to form electromagnetic torque, and the motor rotor 102 is subject to a force and rotates under the action of the electromagnetic torque, thereby implementing conversion from electric energy to mechanical energy.

Refer to FIG. 3. The stator core 1 includes a mounting shaft hole 12, and the motor rotor 102 is mounted in the mounting shaft hole 12 of the stator core 1 in an axial direction (as shown in a direction C in FIG. 3) of the motor stator 101.

FIG. 4 is a diagram of a partial structure of a motor stator according to an embodiment of this application. Refer to FIG. 4. The stator core 1 includes a plurality of stator slots 11. A total number Z of stator slots is a multiple of 9. In some embodiments, the total number Z of stator slots is 36. In some embodiments, the total number Z of stator slots is 72. A person skilled in the art selectively designs the number of stator slots 11 based on an actual requirement.

Refer to FIG. 4. The plurality of stator slots 11 are disposed at intervals in a circumferential direction of the stator core 1, each stator slot 11 extends in an axial direction of the stator core 1 and runs through the stator core 1, each stator slot 11 includes a slot opening 111, the slot opening 111 is provided on an inner wall of the stator core 1, and an opening orientation of the slot opening 111 is parallel to a radial direction of the stator core 1.

The circumferential direction of the stator core 1 is shown as a direction A on a surface of FIG. 4. The radial direction of the stator core 1 is shown as a direction B on the surface of FIG. 4. The axial direction (as shown in the direction C in FIG. 3) of the stator core 1 is a direction perpendicular to the surface of FIG. 4. The plurality of stator slots 11 are disposed at intervals in the circumferential direction of the stator core 1. In the flat wire motor provided in this application, there is a distance between two adjacent stator slots 11 in the circumferential direction of the stator core 1.

In some embodiments, the plurality of stator slots 11 are evenly disposed at intervals in the circumferential direction of the stator core 1, that is, there is a same distance between any two adjacent stator slots 11 in the circumferential direction of the stator core 1. Distances between the plurality of stator slots 11 are the same, so that there are a small number of magnetomotive force harmonics, and there is good magnetic field symmetry. In addition, a torque ripple is slight. This helps improve running stability of the flat wire motor, thereby improving NVH performance of flat wire motor.

In some other embodiments, distances between the plurality of stator slots 11 are not completely the same, so that a torque density of the motor is high, a fault tolerance capability of the motor is strong, and an impact range of a single-phase fault is small.

When a distance between two adjacent stator slots 11 is represented as a slot pitch angle, the slot pitch angle between the two adjacent stator slots 11 is $\frac{360 °}{z}$, where Z is the total number of stator slots 11.

When a distance between two adjacent stator slots 11 is represented as a slot electrical angle, the slot electrical angle between the two adjacent stator slots 11 is $\frac{360 °}{z} \times p$, where Z is the total number of stator slots, and P is a number of magnetic pole pairs.

Refer to FIG. 4. An angle a shows a slot pitch angle or a slot electrical angle between two adjacent stator slots 11. A center line of each stator slot 11 in a radial direction of the motor stator 101 intersects a central axis of the stator core 1. The slot pitch angle a between two adjacent stator slots 11 is an included angle between a center line of one of the two adjacent stator slots 11 in the radial direction of the motor stator and a center line of the other one of the two adjacent stator slots 11 in the radial direction of the motor stator 101.

In embodiments provided in this application, the circumferential direction of the stator core 1 and a circumferential direction of the motor stator 101 are a same direction. Therefore, the circumferential direction of the stator core 1 is also referred to as the circumferential direction of the motor stator 101.

Refer to FIG. 4. Each stator slot 11 is configured to accommodate a plurality of flat wires 21, and the plurality of flat wires 21 in each stator slot 11 are sequentially arranged in a layered manner in the radial direction of the motor stator 101. Flat wires 21 in the plurality of stator slots 11 are connected to form a stator winding 2 (as shown in FIG. 3).

In some embodiments, the flat wire 21 is also referred to as a conductor, and the flat wire 21 is a copper flat wire. The copper has good electrical conductivity, high strength, easy processing and molding, good thermal conductivity, and high stability. Using the copper flat wire in the flat wire motor improves efficiency of the flat wire motor and reduces electric energy loss and heat generation.

In some embodiments, even-numbered layers of flat wires are arranged in each stator slot 11. In some embodiments, the even-numbered layers of flat wires are four layers of flat wires. In some embodiments, the even-numbered layers of flat wires are six layers of flat wires. In some other embodiments, the even-numbered layers of flat wires are eight layers of flat wires. A person skilled in the art selectively designs a number of the even-numbered layers of flat wires in each stator slot 11 based on an actual requirement.

In embodiments provided in this application, a number of phases of the flat wire motor 10 is m, where m is a natural number, m is greater than 1, and each phase winding is a single-branch winding. In some embodiments, m is 2, that is, the flat wire motor 10 is a two-phase motor, and the flat wire motor 10 is powered by a two-phase alternating current power supply. In some embodiments, m is 3, that is, the flat wire motor 10 is a three-phase motor, and the flat wire motor 10 is powered by a three-phase alternating current power supply. In some embodiments, m is greater than 3, that is, the flat wire motor 10 is a motor with more than three phases. A person skilled in the art selectively designs the number of phases of the flat wire motor 10 based on an actual requirement.

For example, the flat wire motor 10 is a three-phase motor. A plurality of flat wires 21 in all stator slots 11 of the motor stator 101 are connected by group to form a three-phase winding. The three-phase winding includes a U-phase winding, a V-phase winding, and a W-phase winding. The U-phase winding, the V-phase winding, and the W-phase winding are all single-branch windings, and each phase winding includes a plurality of phase units. During connection, phase units of the U-phase winding, phase units of the V-phase winding, and phase units of the W-phase winding are periodically arranged in the circumferential direction of the motor stator 101.

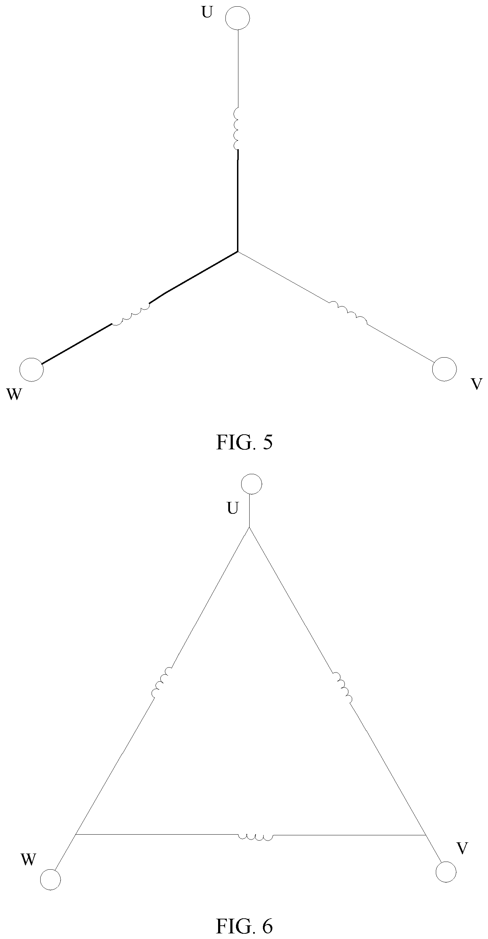

FIG. 5 is a diagram 1 of an end portion connection of a three-phase winding according to an embodiment of this application. Refer to FIG. 5. The letter U represents the U-phase winding. The letter V represents the V-phase winding. The letter W represents the W-phase winding.

Refer to FIG. 5. In the three-phase winding, the U-phase winding, the V-phase winding, and the W-phase winding each are a single-branch winding. A lead-out wire of the U-phase winding, a lead-out wire of the V-phase winding, and a lead-out wire of the W-phase winding are connected in a Y-shaped manner.

FIG. 6 is a diagram 2 of an end portion connection of a three-phase winding according to an embodiment of this application. Refer to FIG. 6. The letter U represents the U-phase winding. The letter V represents the V-phase winding. The letter W represents the W-phase winding.

Refer to FIG. 6. In the three-phase winding, the U-phase winding, the V-phase winding, and the W-phase winding each are a single-branch winding. A lead-out wire of the U-phase winding, a lead-out wire of the V-phase winding, and a lead-out wire of the W-phase winding are connected in a A-shaped manner.

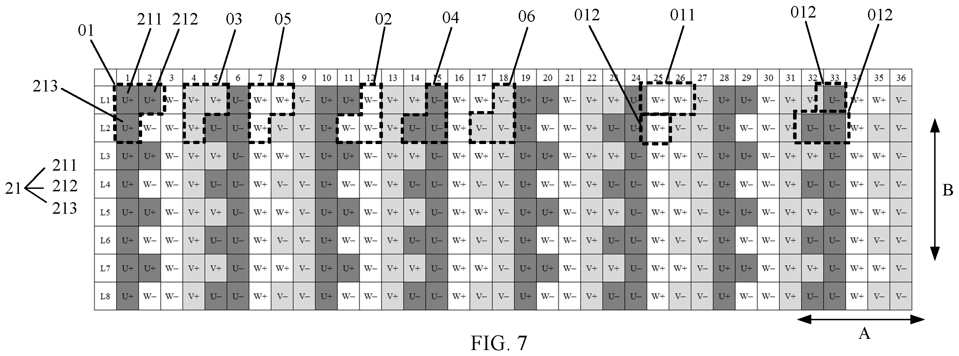

FIG. 7 is a diagram 1 of phase spread distribution of a three-phase winding according to an embodiment of this application. Refer to FIG. 7. The total number Z of stator slots is 36, and the 36 stator slots 11 are sequentially disposed in the direction A in FIG. 7. The direction A in FIG. 7 is the circumferential direction of the motor stator. Numbers 1 to 36 shown in a first row in FIG. 7 represent sequence numbers of the stator slots 11, 1 represents a 1^{st} stator slot, 2 represents a 2^{nd} stator slot, and by analogy, 36 represents a 36^{th} stator slot. The sequence numbers of the stator slots 11 are used to distinguish between the stator slots 11, and are not used to limit positions of the stator slots 11.

Eight layers of flat wires are accommodated in each stator slot 11, and the eight layers of flat wires are sequentially arranged in the direction B in FIG. 7. The direction B in FIG. 7 is the radial direction of the motor stator.

L1 to L6 shown in a first column in FIG. 7 represent numbers of layers of flat wires 21 in a stator slot 11. Flat wires at a layer to which L1 belongs is a 1^{st} layer of flat wires, flat wires at a layer to which L2 belongs is a 2^{nd} layer of flat wires, flat wires at a layer to which L3 belongs is a 3^{rd} layer of flat wires, flat wires at a layer to which L4 belongs is a 4^{th} layer of flat wires, flat wires at a layer to which L5 belongs is a 5^{th} layer of flat wires, flat wires at a layer to which L6 belongs is a 6^{th} layer of flat wires, flat wires at a layer to which L7 belongs is a 7^{th} layer of flat wires, and flat wires at a layer to which L8 belongs is an 8^{th} layer of flat wires. A distance between the 1^{st} layer of flat wires and the slot opening 111 (as shown in FIG. 4) is greater than a distance between another layer of flat wires and the slot opening 111. A distance between the 8^{th} layer of flat wires and the slot opening 111 is less than a distance between another layer of flat wires and the slot opening 111.

In the flat wire motor, each phase winding includes a positive phase spread and a negative phase spread. The positive phase spread is a space area in which a winding current generates a positive magnetomotive force. The negative phase spread is a space area in which a winding current generates a reverse magnetomotive force. The positive phase spread and the negative phase spread of each phase winding are alternately arranged in the direction A, so that magnetomotive forces at three phases are different from each other by an electrical angle of 120° in space, to form a rotating magnetic field.

Refer to FIG. 7. In the direction A, a positive phase spread of the U-phase winding (a phase spread in which U+ is located is the positive phase spread of the U-phase winding), a negative phase spread of the W-phase winding (a phase spread in which W- is located is the negative phase spread of the W-phase winding), a positive phase spread of the V-phase winding (a phase spread in which V+ is located is the positive phase spread of the V-phase winding), a negative phase spread of the U-phase winding (a phase spread in which U-is located is the negative phase spread of the U-phase winding), a positive phase spread of the W-phase winding (a phase spread in which W+ is located is the positive phase spread of the W-phase winding), and a negative phase spread of the V-phase winding (a phase spread in which V- is located is the negative phase spread of the V-phase winding) are sequentially disposed, and form one unit motor.

In the flat wire motor provided in this application, the stator winding 2 includes a plurality of unit motors, flat wires 21 in a stator slot 11 of each of the plurality of unit motors are arranged in a same manner, and the plurality of unit motors are sequentially arranged in the circumferential direction of the motor stator 101. Every nine stator slots 11 form one unit motor, to facilitate even distribution of flat wires 21 of the three-phase winding, facilitate more orderly wiring of the stator winding 2, facilitate structure symmetry of the stator winding 2, and avoid a circulating current between branches, so as to reduce harmonic content and improve NVH performance of the flat wire motor.

In the embodiment shown in FIG. 7, four unit motors are shown. The stator slots 1 to 9, the stator slots 10 to 18, the stator slots 19 to 27, and the stator slots 28 to 36 each form one unit motor. The four unit motors are sequentially arranged in the direction A, and flat wires 21 in the stator slots 11 of the four unit motors are arranged in a same manner. An arrangement manner of another unit motor is not described again in this application.

In a three-phase motor, a phase spread of the three-phase motor refers to an electrical angle range occupied by a three-phase winding per magnetic pole. In the embodiment shown in FIG. 7, a 60° phase spread is used, that is, each phase occupies an electrical angle of 60° per pole, and three phases occupy 180° in total (which corresponds to an electrical angle range of one magnetic pole). In addition, in the embodiment shown in FIG. 7, each unit motor corresponds to one magnetic pole pair, and the four unit motors are arranged in the direction A. A number of pole pairs of the flat wire motor is 4, and a corresponding number of poles of the flat wire motor is 8.

In this embodiment, a number of slots per pole per phase of the flat wire motor is $q = \frac{z}{2 pm} = \frac{36}{8 \times 3} = 1.5$, and the flat wire motor is a fractional slot winding whose number of slots per pole per phase is 1.5. In comparison with a stator winding whose number q of slots per pole per phase is 2, the number q of slots per pole per phase of a stator winding in the flat wire motor is set to 1.5, so that an end portion length of the stator winding is reduced, and costs of the stator winding are reduced. In comparison with a stator winding whose number q of slots per pole per phase is 1, the number q of slots per pole per phase of a stator winding in the flat wire motor is set to 1.5, so that a winding distribution effect is enhanced, a back electromotive force waveform is closer to that of a sine wave, harmonic content is reduced, an order of cogging torque of the stator winding is reduced, and an amplitude is reduced, thereby helping improve NVH performance of the flat wire motor.

Refer to FIG. 7. There are three stator slots 11 between two adjacent phase spreads in each phase winding, to facilitate even distribution of flat wires 21 of the three-phase winding, facilitate more orderly wiring of the stator winding, facilitate structure symmetry of the stator winding, and avoid a circulating current between branches, so as to reduce harmonic content and improve NVH performance of the flat wire motor.

Refer to FIG. 3 and FIG. 7. The flat wires 21 in the plurality of stator slots 11 of the motor stator 101 are arranged into a plurality of circles of flat wires in the radial direction of the motor stator 101. Each circle of flat wires includes a plurality of groups of flat wires sequentially arranged in the circumferential direction of the motor stator 101, each group of flat wires is configured to transmit a same-phase alternating current, and two adjacent groups of flat wires in the circumferential direction of the motor stator 101 are respectively configured to transmit alternating currents of different phases.

In the embodiment in FIG. 7, each unit motor includes six groups of flat wires. The six groups of flat wires are respectively a first group of flat wires 01, a second group of flat wires 02, a third group of flat wires 03, a fourth group of flat wires 04, a fifth group of flat wires 05, and a sixth group of flat wires 06. In one unit motor, the first group of flat wires 01, the second group of flat wires 02, the third group of flat wires 03, the fourth group of flat wires 04, the fifth group of flat wires 05, and the sixth group of flat wires 06 are sequentially arranged in the direction A.

The first group of flat wires 01 and the fourth group of flat wires 04 are configured to transmit a U-phase alternating current. The second group of flat wires 02 and the fifth group of flat wires 05 are configured to transmit a W-phase alternating current. The third group of flat wires 03 and the sixth group of flat wires 06 are configured to transmit a V-phase alternating current. The flat wires 21 in the stator slot 11 in each unit motor are arranged in the same manner. An arrangement manner of another unit motor is not described again in this application.

Each group of flat wires includes a first layer of flat wires 011 and a second layer of flat wires 012 that are adjacently arranged in the direction B, and the first layer of flat wires 011 includes two flat wires 21. Each first layer of flat wires 011 includes two flat wires 21, and the two flat wires 21 are divided into a first flat wire 211 and a second flat wire 212. The first flat wire 211 is located on a left side of the second flat wire 212, and the left side refers to a left side of the direction A on the surface of FIG. 7. When facing FIG. 7, a side corresponding to the left hand is the left side. The first flat wire 211 and the second flat wire 212 are respectively arranged in two adjacent stator slots 11. The second layer of flat wires 012 includes one flat wire 21, which is a third flat wire 213.

Refer to FIG. 7. In each positive phase spread of each phase winding, the third flat wire 213 and the first flat wire 211 are located in a same stator slot 11. In each negative phase spread of each phase winding, the third flat wire 213 and the second flat wire 212 are located in a same stator slot 11. In two adjacent phase spreads of each phase winding, a same layer of flat wires has different numbers of flat wires. Using the 1^{st} layer of flat wires and the 2^{nd} layer of flat wires as an example, a number of flat wires of a 1^{st} layer of flat wires in one of two adjacent phase spreads of each phase winding is 2, and a number of flat wires of a 2^{nd} layer of flat wires is 1. Therefore, a number of flat wires of a 1^{st} layer of flat wires in the other one of the two adjacent phase spreads of each phase winding is 1, and a number of flat wires of a 2^{nd} layer of flat wires is 2.

In the phase spread division manner in FIG. 7, the flat wires 21 of the three-phase winding are evenly distributed in the plurality of stator slots 11. This facilitates more orderly wiring of the three-phase winding, facilitates symmetrical distribution of the three-phase winding in space, reduces a risk of a circulating current between branches caused by uneven distribution of the flat wires 21, and reduces harmonic content of the winding, thereby improving NVH performance of the flat wire motor.

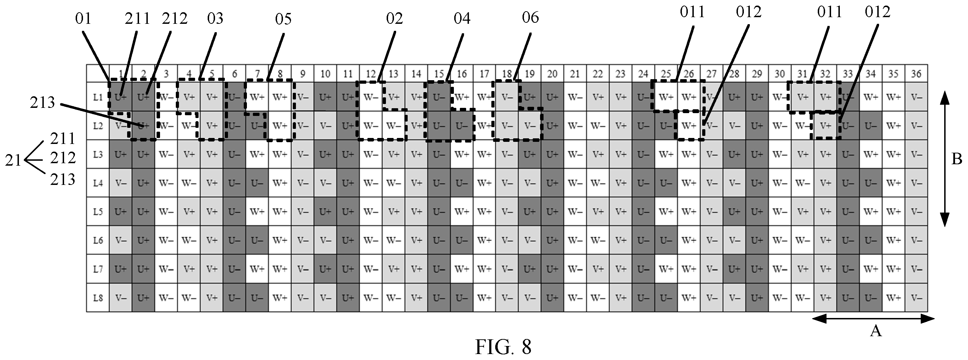

FIG. 8 is a diagram 2 of phase spread distribution of a three-phase winding according to an embodiment of this application. Different from the embodiment provided in FIG. 7, in the embodiment of FIG. 8, in each positive phase spread of each phase winding, the third flat wire 213 and the second flat wire 212 are located in a same stator slot 11. In each negative phase spread of each phase winding, the third flat wire 213 and the first flat wire 211 are located in a same stator slot 11.

In the phase spread division manner in FIG. 8, the flat wires 21 of the three-phase winding are evenly distributed in the plurality of stator slots 11. This facilitates more orderly wiring of the three-phase winding, facilitates symmetrical distribution of the three-phase winding in space, reduces a risk of a circulating current between branches caused by uneven distribution of the flat wires 21, and reduces harmonic content of the winding, thereby improving NVH performance of the flat wire motor.

In the flat wire motor shown in FIG. 7 and FIG. 8, a total number of stator slots of the motor stator is 36, a number of magnetic poles is 8, and each stator slot 11 includes eight layers of flat wires. In another embodiment provided in this application, there are a plurality of forms of motor stators 101. In some embodiments, a total number of stator slots of the motor stator is 72, a number of magnetic poles is 16, and each stator slot 11 includes four layers of flat wires, six layers of flat wires, or eight layers of flat wires. In some embodiments, a total number of stator slots of the motor stator 101 is 36, a number of magnetic poles is 8, and each stator slot 11 includes four layers of flat wires or six layers of flat wires.

In another flat wire motor provided in this application, a phase spread distribution principle of the motor stator is the same as the phase spread distribution principle of the motor stator in FIG. 7, or a phase spread distribution principle of the motor stator is the same as the phase spread distribution principle of the motor stator in FIG. 8. Details are not described again in this application.

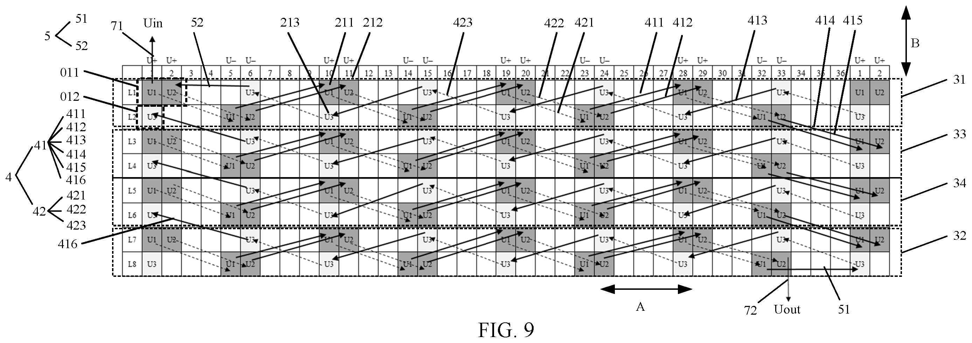

In FIG. 9 to FIG. 16, a solid line represents a wiring manner of a crown end or a cross-wire segment of the stator winding 2, and a dashed line represents a wiring manner of a welding end or a welding segment of the stator winding 2. U+ represents a positive phase spread of the U-phase winding, and U- represents a negative phase spread of the U-phase winding. There are three stator slots 11 between two adjacent phase spreads of the U-phase winding. U1 represents the first flat wire 211. U2 represents the second flat wire 212. U3 represents the third flat wire 213.

In the flat wire motor provided in this application, the stator winding 2 includes a plurality of circles of flat wires, and the plurality of circles of flat wires of the stator winding 2 is half of a number of layers of flat wires in the stator slot 11. The plurality of circles of flat wires of the stator winding 2 are sequentially arranged in the radial direction of the motor stator 101. The plurality of circles of flat wires include a first circle of flat wires 31 and a second circle of flat wires 32. A distance between the first circle of flat wires 31 and an axis of the motor stator 101 is greater than a distance between another circle of flat wires and the axis of the motor stator 101. A distance between the second circle of flat wires 32 and the axis of the motor stator 101 is less than a distance between another circle of flat wires and the axis of the motor stator 101.

The first circle of flat wires 31 is a circle of flat wires that is in the plurality of circles of flat wires and that is farthest away from the motor rotor 102. The second circle of flat wires 32 is a circle of flat wires that is in the plurality of circles of flat wires and that is closest to the motor rotor 102.

In the stator winding 2, a connection segment for connecting two flat wires 21 at different layers is a cross-layer connection segment 4. A connection segment for connecting two flat wires 21 at a same layer is a same-layer connection segment 5.

In some embodiments, two flat wires 21 of a first layer of flat wires 011 in each group of flat wires in the plurality of circles of flat wires are connected to two flat wires 21 of a first layer of flat wires 011 in another group of flat wires in the plurality of circles of flat wires through two cross-layer connection segments 4 in a one-to-one manner. The two cross-layer connection segments 4 are located at an axial end of the motor stator 101, and two flat wires 21 connected through each cross-layer connection segment 4 are respectively arranged at different layers.

Because the two flat wires 21 connected through each cross-layer connection segment 4 are respectively arranged at different layers, the two first layers of flat wires 011 in the two groups of flat wires respectively corresponding to the two flat wires 21 connected through each cross-layer connection segment 4 are located at different layers. This facilitates even distribution of a plurality of groups of flat wires of each phase winding in the stator winding 2 in the circumferential direction of the motor stator 101, facilitates more orderly wiring of the stator winding 2, and facilitates structure symmetry of the stator winding 2, thereby improving NVH performance of flat wire motor.

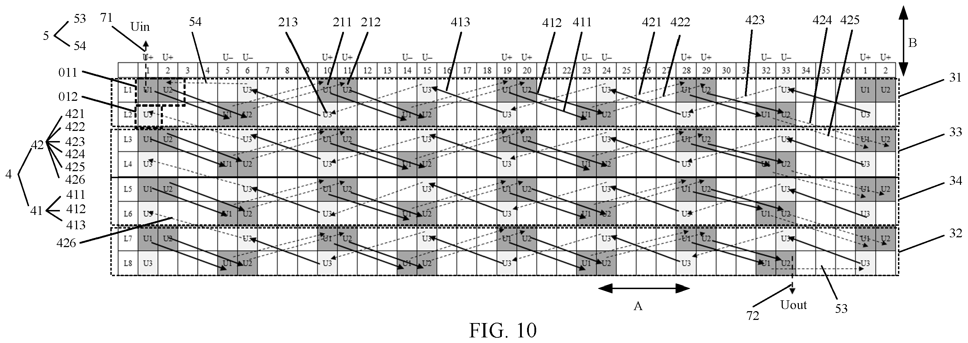

In some embodiments, refer to FIG. 10, FIG. 12, FIG. 14, and FIG. 16. The cross-layer connection segment 4 used to connect the two first layers of flat wires 011 is located at the crown end of the stator winding 2 in the motor stator 101.

In some other embodiments, refer to FIG. 9, FIG. 11, FIG. 13, and FIG. 15. The cross-layer connection segment 4 used to connect the two first layers of flat wires 011 is located at the welding end of the stator winding 2 in the motor stator 101.

In some embodiments, refer to FIG. 9, FIG. 10, FIG. 13, and FIG. 14. Two flat wires 21 of a first layer of flat wires 011 in each group of flat wires in the plurality of circles of flat wires are connected to two flat wires 21 of a first layer of flat wires 011 in another group of flat wires in the plurality of circles of flat wires through two cross-layer connection segments 4 with a same length in a one-to-one manner, to reduce wire types of the stator winding 2 and simplify a structure of the stator winding 2.

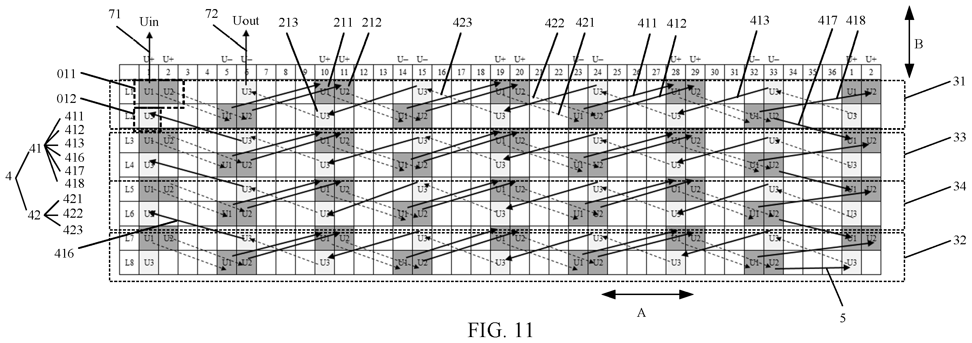

In some embodiments, refer to FIG. 11, FIG. 12, FIG. 15, and FIG. 16. Two flat wires 21 of a first layer of flat wires 011 in some of a plurality of groups of flat wires in the plurality of circles of flat wires are connected to two flat wires 21 of a first layer of flat wires 011 in another group of flat wires in the plurality of circles of flat wires through two cross-layer connection segments 4 with a same length in a one-to-one manner, to reduce wire types of the stator winding 2 and simplify a structure of the stator winding 2.

In some embodiments, refer to FIG. 9 to FIG. 16. Cross-layer connection segments 4 used to connect any two first layers of flat wires 011 in a same circle of flat wires cross a same number of stator slots. This facilitates even distribution of the plurality of groups of flat wires in the stator winding 2, facilitates more orderly wiring of the stator winding 2, facilitates structure symmetry of the stator winding 2, and avoids a circulating current between branches, thereby improving NVH performance of the flat wire motor. In addition, this helps reduce wire types of the stator winding 2, and simplify a structure of the stator winding 2 or the flat wire motor, to simplify processing and assembly processes, and reduce manufacturing costs and assembly costs.

In some embodiments, cross-layer connection segments 4 used to connect two first layers of flat wires 011 in two adjacent circles of flat wires cross a same number of stator slots. This helps reduce wire types of the stator winding 2, simplifies a structure of the stator winding 2 or the flat wire motor, further facilitates more orderly wiring of the stator winding 2, facilitates structure symmetry of the stator winding 2, and avoids a circulating current between branches, thereby improving NVH performance of the flat wire motor.

In some embodiments, refer to FIG. 11, FIG. 12, FIG. 15, and FIG. 16. A first layer of flat wires 011 of one of a plurality of groups of flat wires configured to transmit a same-phase alternating current in each circle of flat wires is connected to first layers of flat wires 011 of two groups of flat wires through two cross-layer connection segments 4 with different lengths in a one-to-one manner, and the two groups of flat wires are respectively located in two adjacent circles of flat wires. One of the two cross-layer connection segments 4 with different lengths is configured to connect first layers of flat wires 011 of two groups of flat wires in a same circle of flat wires, and the other one of the two cross-layer connection segments 4 with different lengths is configured to connect first layers of flat wires 011 of two groups of flat wires in two adjacent circles of flat wires. Through the two cross-layer connection segments 4 with different lengths, connections between flat wires 21 have different spans. This helps form a short-pitch winding, thereby reducing a harmonic winding factor and improving NVH performance of the flat wire motor.

In some embodiments, refer to FIG. 11, FIG. 12, FIG. 15, and FIG. 16. Numbers of stator slots crossed by the two cross-layer connection segments 4 with different lengths differ by 1, so that connections between flat wires 21 have different spans. This helps form a short-pitch winding, thereby reducing a harmonic winding factor and improving NVH performance of the flat wire motor.

In some embodiments, refer to FIG. 9 to FIG. 16. A second layer of flat wires 012 of each group of flat wires in the plurality of circles of flat wires is connected to a second layer of flat wires 012 of another group of flat wires in the plurality of circles of flat wires through one cross-layer connection segment 4, and the two second layers of flat wires 012 connected through the cross-layer connection segment 4 are respectively arranged at different layers. The first layer of flat wires 011 and the second layer of flat wires 012 in each group of flat wires in the plurality of circles of flat wires are connected to corresponding layers of flat wires in different groups of flat wires.

The two second layers of flat wires 012 connected through the cross-layer connection segment 4 are respectively arranged at different layers. This facilitates even distribution of a plurality of groups of flat wires of each phase winding in the stator winding 2 in the circumferential direction of the motor stator 101, so that the stator winding 2 is symmetrically distributed, and NVH performance of the flat wire motor is improved.

The first layer of flat wires 011 and the second layer of flat wires 012 in each group of flat wires are connected to corresponding layers of flat wires in different groups of flat wires, to avoid crossing between cross-layer connection segments 4 for connecting the first layer of flat wires 011 and the second layer of flat wires 012 in each group of flat wires, thereby reducing a risk of a circulating current between branches of the stator winding 2, and simplifying a structure of the stator winding 2. This helps reduce a size of the stator winding 2, to reduce space occupied by the flat wire motor.

In some embodiments, refer to FIG. 9 to FIG. 16. Cross-layer connection segments 4 connected to the second layer of flat wires 012 of each group of flat wires in the plurality of circles of flat wires cross a same number of stator slots, so that a plurality of groups of flat wires in the stator winding 2 are evenly distributed. This facilitates more orderly wiring of the stator winding 2, facilitates structure symmetry of the stator winding 2, and avoids a circulating current between branches, thereby improving NVH performance of the flat wire motor. In addition, this also helps reduce wire types of the stator winding 2, and simplifies a structure of the stator winding 2 or the flat wire motor.

In an embodiment, refer to FIG. 9, FIG. 10, FIG. 13, and FIG. 14. A number of stator slots crossed by a cross-layer connection segment 4 connected to a second layer of flat wires 012 of each group of flat wires in each circle of flat wires is the same as a number of stator slots crossed by a cross-layer connection segment 4 connected to a first layer of flat wires 011 of each group of flat wires. This helps reduce wire types of the stator winding 2, and simplify a structure of the stator winding 2 or the flat wire motor, to simplify processing and assembly processes, and reduce manufacturing costs and assembly costs.

In an embodiment, refer to FIG. 11, FIG. 12, FIG. 15, and FIG. 16. A difference between the number of stator slots crossed by the cross-layer connection segment 4 connected to the second layer of flat wires 012 in each group of flat wires in each circle of flat wires and a number of stator slots crossed by the cross-layer connection segment 4 connected to any flat wire 21 of the first layer of flat wires 011 in one group of flat wires in each circle of flat wires is 1.

Connections between flat wires 21 in a same circle of flat wires have different spans. This helps form a short-pitch winding, thereby reducing a harmonic winding factor and improving NVH performance of the flat wire motor.

In an embodiment, refer to FIG. 11, FIG. 12, FIG. 15, and FIG. 16. One flat wire 21 of a first layer of flat wires 011 in one of a plurality of groups of flat wires configured to transmit a same-phase alternating current in one circle of flat wires located at one end in an arrangement direction of the plurality of circles of flat wires is connected to a second layer of flat wires 012 in another group of flat wires in the same circle of flat wires through a same-layer connection segment 5. The same-layer connection segment 5 is used to implement traversal connection between flat wires 21 of a same phase winding, so that the stator winding 2 maintains electromotive force balance, and a risk of a circulating current between branches is reduced.

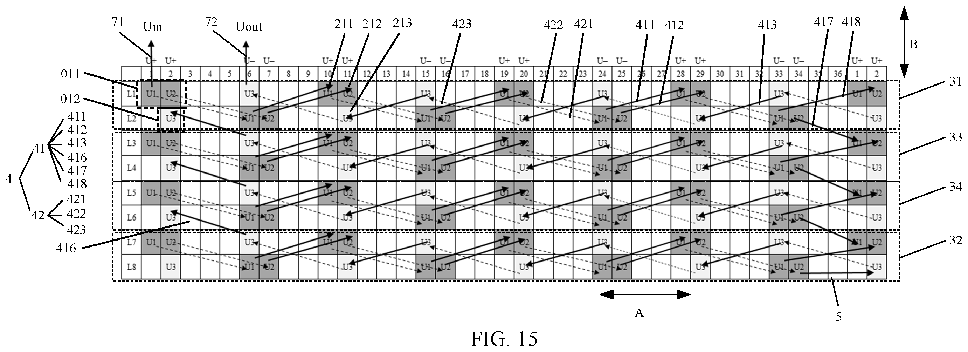

Refer to FIG. 11 and FIG. 15. The same-layer connection segment 5 is located at the crown end of the stator winding 2 in the motor stator 101.

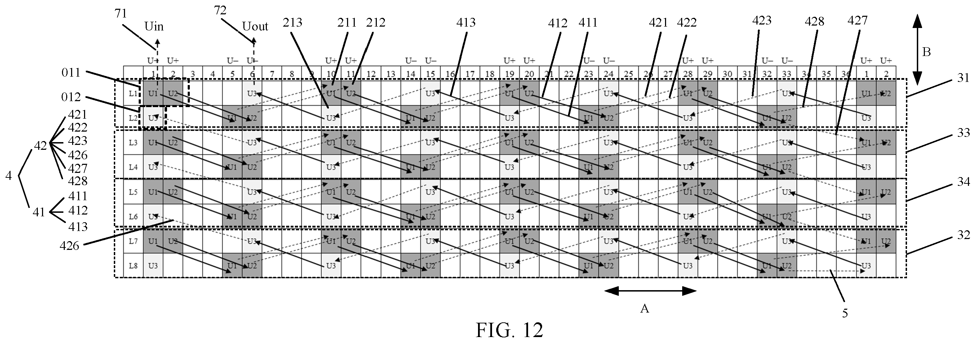

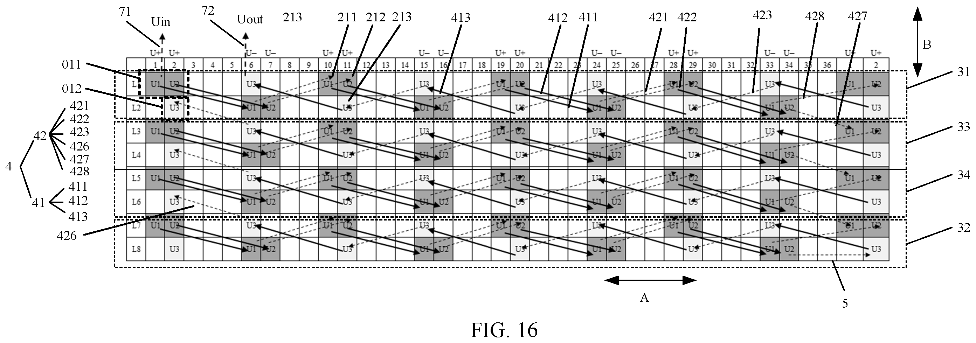

Refer to FIG. 12 and FIG. 16. The same-layer connection segment 5 is located at the welding end of the stator winding 2 in the motor stator 101.

In an embodiment, refer to FIG. 9, FIG. 10, FIG. 13, and FIG. 14. A difference between a number of stator slots crossed by a same-layer connection segment 5 configured to connect a first layer of flat wires 011 and a second layer of flat wires 012 in a first circle of flat wires and a number of stator slots crossed by a same-layer connection segment 5 configured to connect a first layer of flat wires 011 and a second layer of flat wires 012 in a second circle of flat wires is 1. In this way, connections between flat wires 21 of the stator winding 2 have different spans. This helps form a short-pitch winding, thereby reducing a harmonic winding factor and improving NVH performance of the flat wire motor. In addition, traversal connection between flat wires 21 of a same phase winding is implemented, so that the stator winding 2 maintains electromotive force balance, and a risk of a circulating current between branches is reduced.

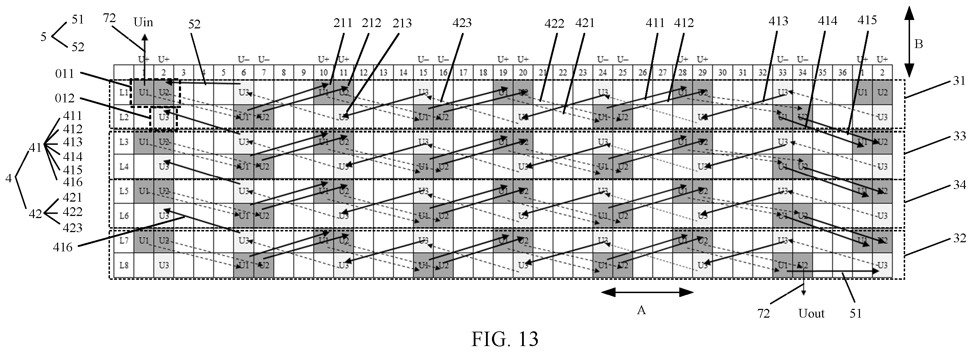

In some embodiments, refer to FIG. 9 and FIG. 13. Both a same-layer connection segment 5 of the first circle of flat wires 31 and a same-layer connection segment 5 of the second circle of flat wires 32 are located at the crown end of the stator winding 2 in the motor stator 101.

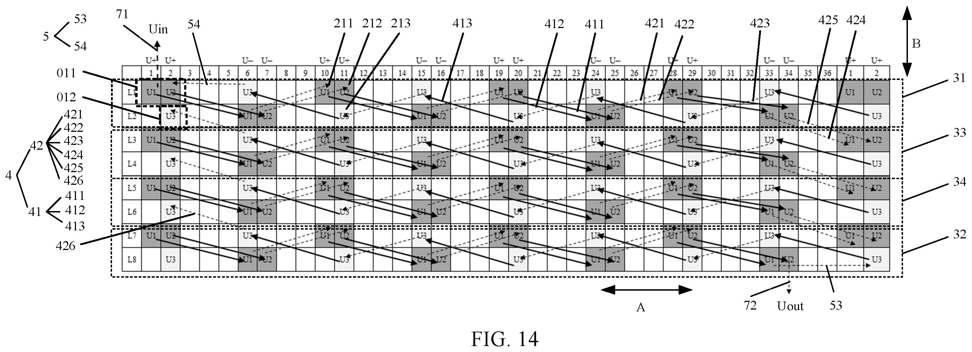

In some embodiments, refer to FIG. 10 and FIG. 14. Both a same-layer connection segment 5 of the first circle of flat wires 31 and a same-layer connection segment 5 of the second circle of flat wires 32 are located at the welding end of the stator winding 2 in the motor stator 101.

In embodiments of this application, the cross-layer connection segment 4 includes a cross-layer cross-wire segment 41 and a cross-layer welding segment 42. The cross-layer cross-wire segment 41 is located at the crown end of the stator winding 2, and the cross-layer welding segment 42 is located at the welding end of the stator winding 2. The same-layer connection segment 5 includes a same-layer cross-wire segment and a same-layer welding segment, and the same-layer cross-wire segment is located at the crown end of the stator winding 2. The same-layer welding segment is located at the welding end of the stator winding 2.

In this application, a number of phases of the flat wire motor 10 is m, a number q of slots per pole per phase of the flat wire motor 10 is 1.5, there are L layers of flat wires in each stator slot 11, there is one same-layer connection segment 5 at the 1^{st} layer and/or the L^{th} layer of each phase winding, and a number of stator slots crossed by the same-layer connection segment 5 is mq±0.5.

Numbers of stator slots crossed by the cross-layer cross-wire segment 41 and the cross-layer welding segment 42 from the 1^{st} layer to the 2^{nd} layer, from the 3^{rd} layer to the 4^{th} layer, ..., and from the (L-1)^{th} layer to the L^{th} layer are mq±0.5, and a sum of the number of stator slots crossed by the cross-layer cross-wire segment 41 and the number of stator slots crossed by the cross-layer welding segment 42 is 2mq. Numbers of stator slots crossed by the cross-layer cross-wire segment 41 from the 2^{nd} layer to the 3^{rd} layer, from the 4^{th} layer to the 5^{th} layer, ..., and from the (L-2)^{th} layer to the (L-1)^{th} layer are m*q±0.5.

The following describes a winding manner of the flat wire motor 10 provided in embodiments of this application with reference to the accompanying drawings.

FIG. 9 is a connection diagram 1 of the U-phase winding in FIG. 7. Refer to FIG. 9. A lead-in wire 71 and a lead-out wire 72 of the U-phase winding are located at the crown end of the stator winding 2, and each of the lead-in wire 71 and the lead-out wire 72 of the U-phase winding has one type of Ipin.

In the embodiment shown in FIG. 9, the plurality of circles of flat wires of the stator winding 2 include a first circle of flat wires 31, a second circle of flat wires 32, a third circle of flat wires 33, and a fourth circle of flat wires 34. The first circle of flat wires 31, the third circle of flat wires 33, the fourth circle of flat wires 34, and the second circle of flat wires 32 are sequentially arranged in the radial direction (as shown in the direction B in FIG. 9) of the motor stator 101.

The third circle of flat wires 33 and the fourth circle of flat wires 34 are located between the first circle of flat wires 31 and the second circle of flat wires 32. A distance between the third circle of flat wires 33 and an axis of the motor stator 101 is greater than a distance between the fourth circle of flat wires 34 and the axis of the motor stator 101. That is, the third circle of flat wires 33 is closer to the first circle of flat wires 31 than the fourth circle of flat wires 34. The fourth circle of flat wires 34 is closer to the second circle of flat wires 32 than the third circle of flat wires 33.

A single-branch winding of the U-phase winding uses the 1^{st} layer (a layer at which L1 is located is the 1^{st} layer) of the 1^{st} stator slot as a lead-in end, and the lead-in wire 71 is configured to connect the 1^{st} layer of flat wires in the 1^{st} stator slot. The lead-in wire enters from the 1^{st} layer of the 1^{st} stator slot, exits from the 2^{nd} layer (a layer at which L2 is located is the 2^{nd} layer) of the 5^{th} stator slot, then enters from the 1^{st} layer of the 10^{th} stator slot, exits from the 2^{nd} layer of the 14^{th} stator slot, then enters from the 1^{st} layer of the 19^{th} stator slot, exits from the 2^{nd} layer of the 23^{rd} stator slot, then enters from the 1^{st} layer of the 28^{th} stator slot, and exits from the 2^{nd} layer of the 32^{nd} stator slot. In this way, the first flat wire 211 in the first circle of flat wires 31 is connected in a traversal manner.

Then, the lead-in wire enters from the 3^{rd} layer (a layer at which L3 is located is the 3^{rd} layer) of the 1^{st} stator slot, exits from the 4^{th} layer (a layer at which L4 is located is the 4^{th} layer) of the 5^{th} stator slot, then enters from the 3^{rd} layer of the 10^{th} stator slot, exits from the 4^{th} layer of the 14^{th} stator slot, then enters from the 3^{rd} layer of the 19^{th} stator slot, exits from the 4^{th} layer of the 23^{rd} stator slot, then enters from the 3^{rd} layer of the 28^{th} stator slot, and exits from the 4^{th} layer of the 32^{nd} stator slot. In this way, the first flat wire 211 in the first circle of flat wires 31 and the first flat wire 211 in the third circle of flat wires 33 are connected in a traversal manner.

Then, the lead-in wire enters from the 5^{th} layer (a layer at which L5 is located is the 5^{th} layer) of the 1^{st} stator slot, exits from the 6^{th} layer (a layer at which L6 is located is the 6^{th} layer) of the 5^{th} stator slot, then enters from the 5^{th} layer of the 10^{th} stator slot, exits from the 6^{th} layer of the 14^{th} stator slot, then enters from the 5^{th} layer of the 19^{th} stator slot, exits from the 6^{th} layer of the 23^{rd} stator slot, then enters from the 5^{th} layer of the 28^{th} stator slot, and exits from the 6^{th} layer of the 32^{nd} stator slot. In this way, the first flat wire 211 in the first circle of flat wires 31, the first flat wire 211 in the third circle of flat wires 33, and the first flat wire 211 in the fourth circle of flat wires 34 are connected in a traversal manner.

Then, the lead-in wire enters from the 7^{th} layer (a layer at which L7 is located is the 7^{th} layer) of the 1^{st} stator slot, exits from the 8^{th} layer (a layer at which L8 is located is the 8^{th} layer) of the 5^{th} stator slot, then enters from the 7^{th} layer of the 10^{th} stator slot, exits from the 8^{th} layer of the 14^{th} stator slot, then enters from the 7^{th} layer of the 19^{th} stator slot, exits from the 8^{th} layer of the 23^{rd} stator slot, then enters from the 7^{th} layer of the 28^{th} stator slot, and exits from the 8^{th} layer of the 32^{nd} stator slot. In this way, the first flat wire 211 in the U-phase winding is connected in a traversal manner.

Then, the lead-in wire enters from the 8^{th} layer of the 1^{st} stator slot, exits from the 7^{th} layer of the 33^{rd} stator slot, then enters from the 8^{th} layer of the 28^{th} stator slot, exits from the 7^{th} layer of the 24^{th} stator slot, then enters from the 8^{th} layer of the 19^{th} stator slot, exits from the 7^{th} layer of the 15^{th} stator slot, then enters from the 8^{th} layer of the 10^{th} stator slot, and exits from the 7^{th} layer of the 6^{th} stator slot. In this way, the first flat wire 211 in the U-phase winding and the third flat wire 213 in the second circle of flat wires 32 are connected in a traversal manner.

Then, the lead-in wire enters from the 6^{th} layer of the 1^{st} stator slot, exits from the 5^{th} layer of the 33^{rd} stator slot, then enters from the 6^{th} layer of the 28^{th} stator slot, exits from the 5^{th} layer of the 24^{th} stator slot, then enters from the 6^{th} layer of the 19^{th} stator slot, exits from the 5^{th} layer of the 15^{th} stator slot, then enters from the 6^{th} layer of the 10^{th} stator slot, and exits from the 5^{th} layer of the 6^{th} stator slot. In this way, the first flat wire 211 in the U-phase winding, the third flat wire 213 in the second circle of flat wires 32, and the third flat wire 213 in the fourth circle of flat wires 34 are connected in a traversal manner.

Then, the lead-in wire enters from the 4^{th} layer of the 1^{st} stator slot, exits from the 3^{rd} layer of the 33^{rd} stator slot, then enters from the 4^{th} layer of the 28^{th} stator slot, exits from the 3^{rd} layer of the 24^{th} stator slot, then enters from the 4^{th} layer of the 19^{th} stator slot, exits from the 3^{rd} layer of the 15^{th} stator slot, then enters from the 4^{th} layer of the 10^{th} stator slot, and exits from the 3^{rd} layer of the 6^{th} stator slot. In this way, the first flat wire 211 in the U-phase winding, the third flat wire 213 in the second circle of flat wires 32, the third flat wire 213 in the fourth circle of flat wires 34, and the third flat wire 213 in the third circle of flat wires 33 are connected in a traversal manner.

Then, the lead-in wire enters from the 2^{nd} layer of the 1^{st} stator slot, exits from the 1^{st} layer of the 33^{rd} stator slot, then enters from the 2^{nd} layer of the 28^{th} stator slot, exits from the 1^{st} layer of the 24^{th} stator slot, then enters from the 2^{nd} layer of the 19^{th} stator slot, exits from the 1^{st} layer of the 15^{th} stator slot, then enters from the 2^{nd} layer of the 10^{th} stator slot, and exits from the 1^{st} layer of the 6^{th} stator slot. In this way, the first flat wire 211 and the third flat wire 213 in the U-phase winding are connected in a traversal manner.

Then, the lead-in wire enters from the 1^{st} layer of the 2^{nd} stator slot, exits from the 2^{nd} layer of the 6^{th} stator slot, then enters from the 1^{st} layer of the 1 l^{th} stator slot, exits from the 2^{nd} layer of the 15^{th} stator slot, then enters from the 1^{st} layer of the 20^{th} stator slot, exits from the 2^{nd} layer of the 24^{th} stator slot, then enters from the 1^{st} layer of the 29^{th} stator slot, and exits from the 2^{nd} layer of the 33^{rd} stator slot. In this way, the first flat wire 211 and the third flat wire 213 in the U-phase winding, and the second flat wire 212 in the first circle of flat wires 31 are connected in a traversal manner.

Then, the lead-in wire enters from the 3^{rd} layer of the 2^{nd} stator slot, exits from the 4^{th} layer of the 6^{th} stator slot, then enters from the 3^{rd} layer of the 11`^{h} stator slot, exits from the 4^{th} layer of the 15^{th} stator slot, then enters from the 3^{rd} layer of the 20^{th} stator slot, exits from the 4^{th} layer of the 24^{th} stator slot, then enters from the 3^{rd} layer of the 29^{th} stator slot, and exits from the 4^{th} layer of the 33^{rd} stator slot. In this way, the first flat wire 211 and the third flat wire 213 in the U-phase winding, the second flat wire 212 in the first circle of flat wires 31, and the second flat wire 212 in the third circle of flat wires 33 are connected in a traversal manner.

Then, the lead-in wire enters from the 5^{th} layer of the 2^{nd} stator slot, exits from the 6^{th} layer of the 6^{th} stator slot, then enters from the 5^{th} layer of the 11`^{h} stator slot, exits from the 6^{th} layer of the 15^{th} stator slot, then enters from the 5^{th} layer of the 20^{th} stator slot, exits from the 6^{th} layer of the 24^{th} stator slot, then enters from the 5^{th} layer of the 29^{th} stator slot, and exits from the 6^{th} layer of the 33^{rd} stator slot. In this way, the first flat wire 211 and the third flat wire 213 in the U-phase winding, the second flat wire 212 in the first circle of flat wires 31, the second flat wire 212 in the third circle of flat wires 33, and the second flat wire 212 in the fourth circle of flat wires 34 are connected in a traversal manner.

Then, the lead-in wire enters from the 7^{th} layer of the 2^{nd} stator slot, exits from the 8^{th} layer of the 6^{th} stator slot, then enters from the 7^{th} layer of the 11`^{h} stator slot, exits from the 8^{th} layer of the 15^{th} stator slot, then enters from the 7^{th} layer of the 20^{th} stator slot, exits from the 8^{th} layer of the 24^{th} stator slot, then enters from the 7^{th} layer of the 29^{th} stator slot, and exits from the 8^{th} layer of the 33^{rd} stator slot. In this way, the flat wires 21 in the U-phase winding are connected in a traversal manner, the 8^{th} layer of the 33^{rd} stator slot is used as a lead-out end of a single-branch winding of the U-phase winding, and the lead-out wire 72 is configured to connect the 8^{th} layer of flat wires of the 33^{rd} stator slot.

In the embodiment shown in FIG. 9, when the phase spreads are symmetrically distributed, the flat wires 21 in the U-phase windings are connected in a traverse manner, so that the three-phase winding maintains electromotive force balance, a risk of a circulating current between branches is reduced, and NVH performance of the flat wire motor is improved.

In the U-phase winding, the cross-layer connection segment 4 located at the crown end is referred to as a cross-layer cross-wire segment 41, and the cross-layer connection segment 4 located at the welding end is referred to as a cross-layer welding segment 42.

In the U-phase winding, a cross-layer cross-wire segment 41 used to connect two first flat wires 211 in a same circle of flat wires is a first cross-wire segment 411. A cross-layer cross-wire segment 41 used to connect two second flat wires 212 in a same circle of flat wires is a second cross-wire segment 412. A cross-layer cross-wire segment 41 used to connect two third flat wires 213 in a same circle of flat wires is a third cross-wire segment 413. A cross-layer cross-wire segment 41 used to connect two first flat wires 211 in different circles of flat wires is a fourth cross-wire segment 414. A cross-layer cross-wire segment 41 used to connect two second flat wires 212 in different circles of flat wires is a fifth cross-wire segment 415. A cross-layer cross-wire segment 41 used to connect two third flat wires 213 in different circles of flat wires is a sixth cross-wire segment 416.

In the U-phase winding, a same-layer connection segment 5 used to connect a first flat wire 211 and a third flat wire 213 in a same layer of flat wires is located at the crown end. Therefore, the same-layer connection segment 5 used to connect the first flat wire 211 and the third flat wire 213 is a first same-layer cross-wire segment 51. A same-layer connection segment 5 used to connect a second flat wire 212 and a third flat wire 213 in a same layer of flat wires is located at the crown end. Therefore, the same-layer connection segment 5 used to connect the second flat wire 212 and the third flat wire 213 is a second same-layer cross-wire segment.

In the U-phase winding, a cross-layer welding segment 42 used to connect two first flat wires 211 is a first welding segment 421, a cross-layer welding segment 42 used to connect two second flat wires 212 is a second welding segment 422, and a cross-layer welding segment 42 used to connect two third flat wires 213 is a third welding segment 423.

In some embodiments, a number of stator slots crossed by the first welding segment 421, a number of stator slots crossed by the second welding segment 422, and a number of stator slots crossed by the third welding segment 423 are the same. This facilitates more orderly wiring at the welding end 62 of the stator winding 2, and facilitates structure symmetry of the stator winding 2, to improve NVH performance of the flat wire motor.

Refer to FIG. 9. The number of stator slots crossed by the first welding segment 421, the number of stator slots crossed by the second welding segment 422, and the number of stator slots crossed by the third welding segment 423 are all 4.

In some embodiments, in the same circle of flat wires, a number of stator slots crossed by the first cross-wire segment 411, a number of stator slots crossed by the second cross-wire segment 412, and a number of stator slots crossed by the third cross-wire segment 413 are the same, and in the same circle of flat wires, wire types of the first cross-wire segment 411, the second cross-wire segment 412, and the third cross-wire segment 413 are the same. This helps reduce a number of flat wire types, and simplify a structure of the stator winding 2 and a manufacturing process of the stator winding 2.

Refer to FIG. 9. The number of stator slots crossed by the first cross-wire segment 411, the number of stator slots crossed by the second cross-wire segment 412, and the number of stator slots crossed by the third cross-wire segment 413 in the same circle of flat wires are all 5.

Compared with a flat wire motor whose number of slots per pole per phase is 2, the flat wire motor provided in this application reduces the number of stator slots crossed by the first cross-wire segment 411, the number of stator slots crossed by the second cross-wire segment 412, and the number of stator slots crossed by the third cross-wire segment 413, so that an end portion length of the stator winding 2 is reduced. The end portion length of the stator winding 2 is a dimension, in the axial direction of the motor stator 101, of an end portion that is of the stator winding 2 and that is exposed to the stator core 1.

In some embodiments, in the same circle of flat wires, wire types of the first cross-wire segment 411, the second cross-wire segment 412, and the third cross-wire segment 413 are the same, but wire types of first cross-wire segments 411 of different circles of flat wires are different, wire types of second cross-wire segments 412 of different circles of flat wires are different, and wire types of third cross-wire segments 413 of different circles of flat wires are different. Therefore, in the U-phase winding in FIG. 9, there are a total of four wire types of the first cross-wire segment 411, the second cross-wire segment 412, and the third cross-wire segment 413.

Refer to FIG. 9. A fourth cross-wire segment 414 used to connect two first flat wires 211 in the first circle of flat wires 31 and the third circle of flat wires 33, a fifth cross-wire segment 415 used to connect two second flat wires 212 in the first circle of flat wires 31 and the third circle of flat wires 33, and a sixth cross-wire segment 416 used to connect two third flat wires 213 in the first circle of flat wires 31 and the third circle of flat wires 33 are of a same wire type, and all cross four stator slots.

A fourth cross-wire segment 414 used to connect two first flat wires 211 in the third circle of flat wires 33 and the fourth circle of flat wires 34, a fifth cross-wire segment 415 used to connect two second flat wires 212 in the third circle of flat wires 33 and the fourth circle of flat wires 34, and a sixth cross-wire segment 416 used to connect two third flat wires 213 in the third circle of flat wires 33 and the fourth circle of flat wires 34 are of a same wire type, and all cross four stator slots.

A fourth cross-wire segment 414 used to connect two first flat wires 211 in the second circle of flat wires 32 and the fourth circle of flat wires 34, a fifth cross-wire segment 415 used to connect two second flat wires 212 in the second circle of flat wires 32 and the fourth circle of flat wires 34, and a sixth cross-wire segment 416 used to connect two third flat wires 213 in the second circle of flat wires 32 and the fourth circle of flat wires 34 are of a same wire type, and all cross four stator slots.

A fourth cross-wire segment 414 used to connect two first flat wires 211 of the first circle of flat wires 31 and the second circle of flat wires 32, a fourth cross-wire segment 414 used to connect two first flat wires 211 of the second circle of flat wires 32 and the third circle of flat wires 33, and a fourth cross-wire segment 414 used to connect two first flat wires 211 of the third circle of flat wires 33 and the fourth circle of flat wires 34 cross a same number of stator slots but have different wire types. Therefore, the fourth cross-wire segments 414 of the U-phase winding have three wire types.

In a same circle of flat wires, wire types of the fourth cross-wire segment 414, the fifth cross-wire segment 415, and the sixth cross-wire segment 416 are the same. Therefore, the fourth cross-wire segment 414, the fifth cross-wire segment 415, and the sixth cross-wire segment 416 of the U-phase winding have three wire types.

Refer to FIG. 9. The first same-layer cross-wire segment 51 is used to connect one first flat wire 211 and one third flat wire 213 at the 8^{th} layer of the second circle of flat wires 32. The second same-layer cross-wire segment 52 is used to connect one second flat wire 212 and one third flat wire 213 at the 1^{st} layer of the first circle of flat wires 31.

In some embodiments, a difference between a number of stator slots crossed by the first same-layer cross-wire segment 51 and a number of stator slots crossed by the second same-layer cross-wire segment is 1. In the embodiment shown in FIG. 9, the number of stator slots crossed by the first same-layer cross-wire segment 51 is 5, and the number of stator slots crossed by the second same-layer cross-wire segment 52 is 4.

In the embodiment shown in FIG. 9, there are two wire types in total for the first same-layer cross-wire segment 51 and the second same-layer cross-wire segment 52. There are three wire types of cross-wire segments used to connect two adjacent circles. There is one wire type of cross-wire segments used to connect a same circle, and there are four wire types in total for cross-wire segments in four circles of flat wires. Therefore, there are nine wire types of Upin hairpin wires.

Each Upin hairpin wire includes a flat wire 21 accommodated in a stator slot 11 and a cross-layer cross-wire segment 41 and a cross-layer welding segment 42 that are located outside the stator slot 11. Each Upin hairpin wire has two flat wires 21 accommodated in stator slots 11, and the two flat wires 21 are respectively inserted into two different stator slots 11. The Upin hairpin wire connects the two flat wires 21 through the cross-layer cross-wire segment 41.

In the embodiment shown in FIG. 9, Upin hairpin wires at the layers are independent of each other, there is no need for an additional cross-layer hairpin wire, and fully automatic wire insertion is implemented by using independent wire cups, thereby simplifying a manufacturing process and facilitating mass production.

In the embodiment shown in FIG. 7 of this application, both a flat wire distribution manner of the W-phase winding and a flat wire distribution manner of the V-phase winding are the same as a flat wire distribution manner of the U-phase winding. Therefore, in the embodiment shown in FIG. 9, both a flat wire connection manner of the W-phase winding and a flat wire connection manner of the V-phase winding are the same as a flat wire connection manner of the U-phase winding, and the flat wire connection manner of the W-phase winding and the flat wire connection manner of the V-phase winding may be obtained by translating the flat wire connection manner of the U-phase winding. Details are not described herein in this application.

FIG. 10 is a connection diagram 2 of the U-phase winding in FIG. 7. A wave winding connection manner of the U-phase winding in the embodiment shown in FIG. 10 is the same as the wave winding connection manner of the U-phase winding in the embodiment shown in FIG. 9. Details are not described herein in this application. Different from the embodiment shown in FIG. 9, in the embodiment shown in FIG. 10, the lead-in wire 71 and the lead-out wire 72 of the U-phase winding are located at the welding end of the stator winding 2.

In the U-phase winding, a cross-layer cross-wire segment 41 used to connect two first flat wires 211 in a same circle of flat wires is a first cross-wire segment 411. A cross-layer cross-wire segment 41 used to connect two second flat wires 212 in a same circle of flat wires is a second cross-wire segment 412. A cross-layer cross-wire segment 41 used to connect two third flat wires 213 in a same circle of flat wires is a third cross-wire segment 413.

In the U-phase winding, a same-layer connection segment 5 used to connect a first flat wire 211 and a third flat wire 213 in a same layer of flat wires is located at the welding segment. Therefore, the same-layer connection segment 5 used to connect the first flat wire 211 and the third flat wire 213 is a first same-layer welding segment 53. A same-layer connection segment 5 used to connect a second flat wire 212 and a third flat wire 213 in a same layer of flat wires is located at the welding segment. Therefore, the same-layer connection segment 5 used to connect the second flat wire 212 and the third flat wire 213 is a second same-layer welding segment 54.

In the U-phase winding, a cross-layer welding segment 42 used to connect two first flat wires 211 in a same circle of flat wires is a first welding segment 421. A cross-layer welding segment 42 used to connect two second flat wires 212 in a same circle of flat wires is a second welding segment 422. A cross-layer welding segment 42 used to connect two third flat wires 213 in a same circle of flat wires is a third welding segment 423. A cross-layer welding segment 42 used to connect two first flat wires 211 in different circles of flat wires is a fourth welding segment 424. A cross-layer welding segment 42 used to connect two second flat wires 212 in different circles of flat wires is a fifth welding segment 425. A cross-layer welding segment 42 used to connect two third flat wires 213 in different circles of flat wires is a sixth welding segment 426.

In some embodiments, in the same circle of flat wires, a number of stator slots crossed by the first cross-wire segment 411, a number of stator slots crossed by the second cross-wire segment 412, and a number of stator slots crossed by the third cross-wire segment 413 are the same, and in the same circle of flat wires, wire types of the first cross-wire segment 411, the second cross-wire segment 412, and the third cross-wire segment 413 are the same. This helps reduce a number of wire types of the flat wires 21, and simplify a structure of the stator winding 2 and a manufacturing process of the stator winding 2.

Refer to FIG. 10. The number of stator slots crossed by the first cross-wire segment 411, the number of stator slots crossed by the second cross-wire segment 412, and the number of stator slots crossed by the third cross-wire segment 413 in the same circle of flat wires are 4.

Compared with a flat wire motor whose number of slots per pole per phase is 2, the flat wire motor provided in this application reduces the number of stator slots crossed by the first cross-wire segment 411, the number of stator slots crossed by the second cross-wire segment 412, and the number of stator slots crossed by the third cross-wire segment 413, so that an end portion length of the stator winding 2 is reduced. The end portion length of the stator winding 2 is a dimension, in the axial direction of the motor stator 101, of an end portion that is of the stator winding 2 and that is exposed to the stator core 1.

In some embodiments, in the same circle of flat wires, wire types of the first cross-wire segment 411, the second cross-wire segment 412, and the third cross-wire segment 413 are the same, but wire types of first cross-wire segments 411 of different circles of flat wires are different, wire types of second cross-wire segments 412 of different circles of flat wires are different, and wire types of third cross-wire segments 413 of different circles of flat wires are different. Therefore, in the U-phase winding in FIG. 10, there are a total of four wire types of the first cross-wire segment 411, the second cross-wire segment 412, and the third cross-wire segment 413.

In the embodiment shown in FIG. 10, there are four wire types of cross-wire segments used to connect a same circle. Therefore, there are four wire types of Upin hairpin wires of the U-phase winding.

Each Upin hairpin wire includes a flat wire 21 accommodated in a stator slot 11 and a cross-layer cross-wire segment 41 and a cross-layer welding segment 42 that are located outside the stator slot 11. Each Upin hairpin wire has two flat wires 21 accommodated in stator slots 11, and the two flat wires 21 are respectively inserted into two different stator slots 11. The Upin hairpin wire connects the two flat wires 21 through the cross-layer cross-wire segment 41.

In the embodiment shown in FIG. 10, Upin hairpin wires at the layers are independent of each other, there is no need for an additional cross-layer hairpin wire, and fully automatic wire insertion is implemented by using independent wire cups, thereby simplifying a manufacturing process and facilitating mass production.

In some embodiments, the first same-layer welding segment 53 is used to connect one first flat wire 211 and one third flat wire 213 at the 8^{th} layer of the second circle of flat wires 32. The second same-layer welding segment 54 is used to connect one second flat wire 212 and one third flat wire 213 at the 1^{st} layer of the first circle of flat wires 31.

In some embodiments, a difference between a number of stator slots crossed by the first same-layer welding segment 53 and a number of stator slots crossed by the second same-layer welding segment 54 is 1. In the embodiment shown in FIG. 10, the number of stator slots crossed by the first same-layer welding segment 53 is 5, and the number of stator slots crossed by the second same-layer welding segment 54 is 4.

In some embodiments, in a same circle of flat wires, a number of stator slots crossed by the first welding segment 421, a number of stator slots crossed by the second welding segment 422, and a number of stator slots crossed by the third welding segment 423 are the same. This facilitates more orderly wiring at the welding end 62 of the stator winding 2, and facilitates structure symmetry of the stator winding 2, to improve NVH performance of the flat wire motor.

In the embodiment shown in FIG. 10, in the same circle of flat wires, the number of stator slots crossed by the first welding segment 421, the number of stator slots crossed by the second welding segment 422, and the number of stator slots crossed by the third welding segment 423 are all 5.

In some embodiments, a number of stator slots crossed by a fourth welding segment 424 used to connect two first flat wires 211 of two adjacent circles of flat wires, a number of stator slots crossed by a fifth welding segment 425 used to connect two second flat wires 212 of two adjacent circles of flat wires, and a number of stator slots crossed by a fourth welding segment 424 used to connect two third flat wires 213 of two adjacent circles of flat wires are the same. This facilitates more orderly wiring at the welding end 62 of the stator winding 2, and facilitates structure symmetry of the stator winding 2, to improve NVH performance of the flat wire motor.

In the embodiment shown in FIG. 10, the number of stator slots crossed by the fourth welding segment 424 used to connect two first flat wires 211 of two adjacent circles of flat wires, the number of stator slots crossed by the fifth welding segment 425 used to connect two second flat wires 212 of two adjacent circles of flat wires, and the number of stator slots crossed by the fourth welding segment 424 used to connect two third flat wires 213 of two adjacent circles of flat wires are all 5.

In the embodiment shown in FIG. 7 of this application, both a flat wire distribution manner of the W-phase winding and a flat wire distribution manner of the V-phase winding are the same as a flat wire distribution manner of the U-phase winding. Therefore, in the embodiment shown in FIG. 10, both a flat wire connection manner of the W-phase winding and a flat wire connection manner of the V-phase winding are the same as a flat wire connection manner of the U-phase winding, and the flat wire connection manner of the W-phase winding and the flat wire connection manner of the V-phase winding may be obtained by translating the flat wire connection manner of the U-phase winding. Details are not described herein in this application.

FIG. 11 is a connection diagram 3 of the U-phase winding in FIG. 7. Refer to FIG. 11. A lead-in wire 71 and a lead-out wire 72 of the U-phase winding are located at the crown end 61 of the stator winding 2, and the lead-in wire 71 and the lead-out wire 72 of the U-phase winding are located at a same layer. The lead-in wire 71 and the lead-out wire 72 of the U-phase winding each have one type of Ipin.

In the embodiment shown in FIG. 11, the stator winding 2 includes a first circle of flat wires 31, a second circle of flat wires 32, a third circle of flat wires 33, and a fourth circle of flat wires 34. The first circle of flat wires 31, the third circle of flat wires 33, the fourth circle of flat wires 34, and the second circle of flat wires 32 are sequentially arranged in the radial direction (as shown in the direction B in FIG. 11) of the motor stator 101.

The third circle of flat wires 33 and the fourth circle of flat wires 34 are located between the first circle of flat wires 31 and the second circle of flat wires 32. A distance between the third circle of flat wires 33 and an axis of the motor stator 101 is greater than a distance between the fourth circle of flat wires 34 and the axis of the motor stator 101. That is, the third circle of flat wires 33 is closer to the first circle of flat wires 31 than the fourth circle of flat wires 34. The fourth circle of flat wires 34 is closer to the second circle of flat wires 32 than the third circle of flat wires 33.

A branch of the U-phase winding uses the 1^{st} layer of the 1^{st} stator slot as a lead-in end, and the lead-in wire 71 is configured to connect the 1^{st} layer of flat wires in the 1^{st} stator slot. The lead-in wire enters from the 1^{st} layer of the 1^{st} stator slot, exits from the 2^{nd} layer of the 5^{th} stator slot, then enters from the 1^{st} layer of the 10^{th} stator slot, exits from the 2^{nd} layer of the 14^{th} stator slot, then enters from the 1^{st} layer of the 19^{th} stator slot, exits from the 2^{nd} layer of the 23^{rd} stator slot, then enters from the 1^{st} layer of the 28^{th} stator slot, exits from the 2^{nd} layer of the 32^{nd} stator slot, then enters from the 1^{st} layer of the 2^{nd} stator slot, exits from the 2^{nd} layer of the 6^{th} stator slot, then enters from the 1^{st} layer of the 11^{th} stator slot, exits from the 2^{nd} layer of the 15^{th} stator slot, then enters from the 1^{st} layer of the 20^{th} stator slot, exits from the 2^{nd} layer of the 24^{th} stator slot, then enters from the 1^{st} layer of the 29^{th} stator slot, and exits from the 2^{nd} layer of the 33^{rd} stator slot. In this way, the first flat wire 211 and the second flat wire 212 in the first circle of flat wires 31 are connected in a traversal manner.

Then, the lead-in wire enters from the 3^{rd} layer of the 1^{st} stator slot, exits from the 4^{th} layer of the 5^{th} stator slot, then enters from the 3^{rd} layer of the 10^{th} stator slot, exits from the 4^{th} layer of the 14^{th} stator slot, then enters from the 3^{rd} layer of the 19^{th} stator slot, exits from the 4^{th} layer of the 23^{rd} stator slot, then enters from the 3^{rd} layer of the 28^{th} stator slot, exits from the 4^{th} layer of the 32^{nd} stator slot, then enters from the 3^{rd} layer of the 2^{nd} stator slot, exits from the 4^{th} layer of the 6^{th} stator slot, then enters from the 3^{rd} layer of the 11^{th} stator slot, exits from the 4^{th} layer of the 15^{th} stator slot, then enters from the 3^{rd} layer of the 20^{th} stator slot, exits from the 4^{th} layer of the 24^{th} stator slot, then enters from the 3^{rd} layer of the 29^{th} stator slot, and exits from the 4^{th} layer of the 33^{rd} stator slot. In this way, the first flat wires 211 and the second flat wires 212 in the first circle of flat wires 31 and the third circle of flat wires 33 are connected in a traversal manner.

Then, the lead-in wire enters from the 5^{th} layer of the 1^{st} stator slot, exits from the 6^{th} layer of the 5^{th} stator slot, then enters from the 5^{th} layer of the 10^{th} stator slot, exits from the 6^{th} layer of the 14^{th} stator slot, then enters from the 5^{th} layer of the 19^{th} stator slot, exits from the 6^{th} layer of the 23^{rd} stator slot, then enters from the 5^{th} layer of the 28^{th} stator slot, exits from the 6^{th} layer of the 32^{nd} stator slot, then enters from the 5^{th} layer of the 2^{nd} stator slot, exits from the 6^{th} layer of the 6^{th} stator slot, then enters from the 5^{th} layer of the 11^{th} stator slot, exits from the 6^{th} layer of the 15^{th} stator slot, then enters from the 5^{th} layer of the 20^{th} stator slot, exits from the 6^{th} layer of the 24^{th} stator slot, then enters from the 5^{th} layer of the 29^{th} stator slot, and exits from the 6^{th} layer of the 33^{rd} stator slot. In this way, the first flat wires 211 and the second flat wires 212 in the first circle of flat wires 31, the third circle of flat wires 33, and the fourth circle of flat wires 34 are connected in a traversal manner.

Then, the lead-in wire enters from the 7^{th} layer of the 1^{st} stator slot, exits from the 8^{th} layer of the 5^{th} stator slot, then enters from the 7^{th} layer of the 10^{th} stator slot, exits from the 8^{th} layer of the 14^{th} stator slot, then enters from the 7^{th} layer of the 19^{th} stator slot, exits from the 8^{th} layer of the 23^{rd} stator slot, then enters from the 7^{th} layer of the 28^{th} stator slot, exits from the 8^{th} layer of the 32^{nd} stator slot, then enters from the 7^{th} layer of the 2^{nd} stator slot, exits from the 8^{th} layer of the 6^{th} stator slot, then enters from the 7^{th} layer of the 11^{th} stator slot, exits from the 8^{th} layer of the 15^{th} stator slot, then enters from the 7^{th} layer of the 20^{th} stator slot, exits from the 8^{th} layer of the 24^{th} stator slot, then enters from the 7^{th} layer of the 29^{th} stator slot, and exits from the 8^{th} layer of the 33^{rd} stator slot. In this way, the first flat wire 211 and the second flat wire 212 in the U-phase winding are connected in a traversal manner.

Then, the lead-in wire enters from the 8^{th} layer of the 1^{st} stator slot, exits from the 7^{th} layer of the 33^{rd} stator slot, then enters from the 8^{th} layer of the 28^{th} stator slot, exits from the 7^{th} layer of the 24^{th} stator slot, then enters from the 8^{th} layer of the 19^{th} stator slot, exits from the 7^{th} layer of the 15^{th} stator slot, then enters from the 8^{th} layer of the 10^{th} stator slot, and exits from the 7^{th} layer of the 6^{th} stator slot. In this way, the first flat wire 211 and the second flat wire 212 in the U-phase winding, and the third flat wire 213 in the second circle of flat wires 32 are connected in a traversal manner.

Then, the lead-in wire enters from the 6^{th} layer of the 1^{st} stator slot, exits from the 5^{th} layer of the 33^{rd} stator slot, then enters from the 6^{th} layer of the 28^{th} stator slot, exits from the 5^{th} layer of the 24^{th} stator slot, then enters from the 6^{th} layer of the 19^{th} stator slot, exits from the 5^{th} layer of the 15^{th} stator slot, then enters from the 6^{th} layer of the 10^{th} stator slot, and exits from the 5^{th} layer of the 6^{th} stator slot. In this way, the first flat wire 211 and the second flat wire 212 in the U-phase winding, and the third flat wires 213 in the second circle of flat wires 32 and the fourth circle of flat wires 34 are connected in a traverse manner.

Then, the first branch lead-in wire enters from the 4^{th} layer of the 1^{st} stator slot, exits from the 3^{rd} layer of the 33^{rd} stator slot, then enters from the 4^{th} layer of the 28^{th} stator slot, exits from the 3^{rd} layer of the 24^{th} stator slot, then enters from the 4^{th} layer of the 19^{th} stator slot, exits from the 3^{rd} layer of the 15^{th} stator slot, then enters from the 4^{th} layer of the 10^{th} stator slot, and exits from the 3^{rd} layer of the 6^{th} stator slot. In this way, the first flat wire 211 and the second flat wire 212 in the U-phase winding, and the third flat wires 213 in the second circle of flat wires 32, the fourth circle of flat wires 34, and the third circle of flat wires 33 are connected in a traversal manner.

Then, the first branch lead-in wire enters from the 2^{nd} layer of the 1^{st} stator slot, exits from the 1^{st} layer of the 33^{rd} stator slot, then enters from the 2^{nd} layer of the 28^{th} stator slot, exits from the 1^{st} layer of the 24^{th} stator slot, then enters from the 2^{nd} layer of the 19^{th} stator slot, exits from the 1^{st} layer of the 15^{th} stator slot, then enters from the 2^{nd} layer of the 10^{th} stator slot, and exits from the 1^{st} layer of the 6^{th} stator slot. In this way, the flat wires 21 of the U-phase winding are connected in a traversal manner. The 1^{st} layer of the 6^{th} stator slot is used as a lead-out end of the branch of the U-phase winding, and the lead-out wire 72 is configured to connect the 1^{st} layer of flat wires in the 6^{th} stator slot.

In the embodiment shown in FIG. 11, when the phase spreads are symmetrically distributed, the flat wires 21 in the U-phase windings are connected in a traverse manner, so that the three-phase winding maintains electromotive force balance, and a risk of a circulating current between branches is reduced.

In the U-phase winding, the cross-layer connection segment 4 located at the crown end is referred to as a cross-layer cross-wire segment 41, and the cross-layer connection segment 4 located at the welding segment is referred to as a cross-layer welding segment 42.

In the U-phase winding, a cross-layer cross-wire segment 41 used to connect two first flat wires 211 in a same circle of flat wires is a first cross-wire segment 411. A cross-layer cross-wire segment 41 used to connect two second flat wires 212 in a same circle of flat wires is a second cross-wire segment 412. A cross-layer cross-wire segment 41 used to connect two third flat wires 213 in a same circle of flat wires is a third cross-wire segment 413. A cross-layer cross-wire segment 41 used to connect two third flat wires 213 in different circles of flat wires is a sixth cross-wire segment 416. A cross-layer cross-wire segment 41 used to connect a first flat wire 211 and a second flat wire 212 in different circles of flat wires is a seventh cross-wire segment 417. A cross-layer cross-wire segment 41 used to connect one first flat wire 211 and one second flat wire 212 in a same circle of flat wires is an eighth cross-wire segment 418.

In the U-phase winding, a cross-layer welding segment 42 used to connect two first flat wires 211 is a first welding segment 421. A cross-layer welding segment 42 used to connect two second flat wires 212 is a second welding segment 422. A cross-layer welding segment 42 used to connect two third flat wires 213 is a third welding segment 423.

In some embodiments, a number of stator slots crossed by the first welding segment 421, a number of stator slots crossed by the second welding segment 422, and a number of stator slots crossed by the third welding segment 423 are the same. This facilitates more orderly wiring at the welding end 62 of the stator winding 2, and facilitates structure symmetry of the stator winding 2, to improve NVH performance of the flat wire motor.

Refer to FIG. 11. The number of stator slots crossed by the first welding segment 421, the number of stator slots crossed by the second welding segment 422, and the number of stator slots crossed by the third welding segment 423 are all 4.

In some embodiments, in the same circle of flat wires, a number of stator slots crossed by the first cross-wire segment 411, a number of stator slots crossed by the second cross-wire segment 412, and a number of stator slots crossed by the third cross-wire segment 413 are the same, and in the same circle of flat wires, wire types of the first cross-wire segment 411, the second cross-wire segment 412, and the third cross-wire segment 413 are the same. This helps reduce a number of wire types of the flat wires 21, and simplify a structure of the stator winding 2 and a manufacturing process of the stator winding 2.

Refer to FIG. 11. The number of stator slots crossed by the first cross-wire segment 411, the number of stator slots crossed by the second cross-wire segment 412, and the number of stator slots crossed by the third cross-wire segment 413 in the same circle of flat wires are all 5.

Compared with a flat wire motor whose number of slots per pole per phase is 2, the flat wire motor provided in this application reduces the number of stator slots crossed by the first cross-wire segment 411, the number of stator slots crossed by the second cross-wire segment 412, and the number of stator slots crossed by the third cross-wire segment 413, so that an end portion length of the stator winding 2 is reduced.

In some embodiments, in the same circle of flat wires, wire types of the first cross-wire segment 411, the second cross-wire segment 412, and the third cross-wire segment 413 are the same, but wire types of first cross-wire segments 411 of different circles of flat wires are different, wire types of second cross-wire segments 412 of different circles of flat wires are different, and wire types of third cross-wire segments 413 of different circles of flat wires are different. Therefore, in the U-phase winding in FIG. 11, there are a total of four wire types of the first cross-wire segment 411, the second cross-wire segment 412, and the third cross-wire segment 413.

Refer to FIG. 11. The 2^{nd} layer of flat wires of the 1^{st} stator slot in the first circle of flat wires 31 is connected to the 3^{rd} layer of flat wires of the 6^{th} stator slot in the third circle of flat wires 33 through a sixth cross-wire segment 416. The 4^{th} layer of flat wires of the 1^{st} stator slot in the third circle of flat wires 33 is connected to the 5^{th} layer of flat wires of the 6^{th} stator slot in the fourth circle of flat wires 34 through a sixth cross-wire segment 416. The 6^{th} layer of flat wires of the 1^{st} stator slot in the fourth circle of flat wires 34 is connected to the 7^{th} layer of flat wires of the 6^{th} stator slot in the second circle of flat wires 32 through a sixth cross-wire segment 416. The three sixth cross-wire segments 416 cross a same number of stator slots but have different wire types, and there are three wire types. A number of stator slots crossed by each sixth cross-wire segment 416 is 5.

Refer to FIG. 11. The 2^{nd} layer of flat wires of the 33^{rd} stator slot in the first circle of flat wires 31 is connected to the 3^{rd} layer of flat wires of the 1^{st} stator slot in the third circle of flat wires 33 through a seventh cross-wire segment 417. The 4^{th} layer of flat wires of the 33^{rd} stator slot in the third circle of flat wires 33 is connected to the 5^{th} layer of flat wires of the 1^{st} stator slot in the fourth circle of flat wires 34 through a seventh cross-wire segment 417. The 6^{th} layer of flat wires of the 33^{rd} stator slot in the fourth circle of flat wires 34 is connected to the 7^{th} layer of flat wires of the 1^{st} stator slot in the second circle of flat wires 32 through a seventh cross-wire segment 417. The three seventh cross-wire segments 417 cross a same number of stator slots but have different wire types, and there are three wire types. A number of stator slots crossed by each seventh cross-wire segment 417 is 4.

Refer to FIG. 11. The 2^{nd} layer of flat wires of the 32^{nd} stator slot in the first circle of flat wires 31 is connected to the 1^{st} layer of flat wires of the 2^{nd} stator slot in the first circle of flat wires 31 through an eighth cross-wire segment 418. The 4^{th} layer of flat wires of the 32^{nd} stator slot in the third circle of flat wires 33 is connected to the 3^{rd} layer of flat wires of the 2^{nd} stator slot in the third circle of flat wires 33 through an eighth cross-wire segment 418. The 6^{th} layer of flat wires of the 32^{nd} stator slot in the fourth circle of flat wires 34 is connected to the 5^{th} layer of flat wires of the 2^{nd} stator slot in the fourth circle of flat wires 34 through an eighth cross-wire segment 418. The 8^{th} layer of flat wires of the 32^{nd} stator slot in the second circle of flat wires 32 is connected to the 7^{th} layer of flat wires of the 2^{nd} stator slot in the second circle of flat wires 32 through an eighth cross-wire segment 418. The four seventh cross-wire segments 417 cross a same number of stator slots but have different wire types, and there are four wire types. A number of stator slots crossed by each eighth cross-wire segment 418 is 6.

Refer to FIG. 11. A same-layer connection segment 5 used to connect the 8^{th} layer of flat wires of the 33^{rd} stator slot and the 8^{th} layer of flat wires of the 1^{st} stator slot is located at the crown end 61 of the stator winding 2, a number of stator slots crossed by the same-layer connection wire is 4, and there is one wire type.

In the embodiment shown in FIG. 11, there is one wire type of the same-layer connection segment 5, four wire types of the eighth cross-wire segment 418, three wire types of the seventh cross-wire segment 417, three wire types of the sixth cross-wire segment 416, and four wire types of the first cross-wire segment 411, the second cross-wire segment 412, and the third cross-wire segment 413. Therefore, in the U-phase winding shown in FIG. 11, there are 15 wire types of Upin hairpin wires.

Each Upin hairpin wire includes a flat wire 21 accommodated in a stator slot 11 and a cross-layer cross-wire segment 41 and a cross-layer welding segment 42 that are located outside the stator slot 11. Each Upin hairpin wire has two flat wires 21 accommodated in stator slots 11, and the two flat wires 21 are respectively inserted into two different stator slots 11. The Upin hairpin wire connects the two flat wires 21 through the cross-layer cross-wire segment 41.

In the embodiment shown in FIG. 11, Upin hairpin wires at the layers are independent of each other, there is no need for an additional cross-layer hairpin wire, and fully automatic wire insertion is implemented by using independent wire cups, thereby simplifying a manufacturing process and facilitating mass production.

In the embodiment shown in FIG. 7 of this application, both a flat wire distribution manner of the W-phase winding and a flat wire distribution manner of the V-phase winding are the same as a flat wire distribution manner of the U-phase winding. Therefore, in the embodiment shown in FIG. 11, both a flat wire connection manner of the W-phase winding and a flat wire connection manner of the V-phase winding are the same as a flat wire connection manner of the U-phase winding, and the flat wire connection manner of the W-phase winding and the flat wire connection manner of the V-phase winding may be obtained by translating the flat wire connection manner of the U-phase winding. Details are not described herein in this application.

FIG. 12 is a connection diagram 4 of the U-phase winding in FIG. 7. A wave winding connection manner of the U-phase winding in the embodiment shown in FIG. 12 is the same as the wave winding connection manner of the U-phase winding in the embodiment shown in FIG. 11. Details are not described herein in this application. Different from the embodiment shown in FIG. 11, in the embodiment shown in FIG. 10, the lead-in wire 71 and the lead-out wire 72 of the U-phase winding are located at the welding end of the stator winding 2.

In the U-phase winding, a cross-layer cross-wire segment 41 used to connect two first flat wires 211 in a same circle of flat wires is a first cross-wire segment 411. A cross-layer cross-wire segment 41 used to connect two second flat wires 212 in a same circle of flat wires is a second cross-wire segment 412. A cross-layer cross-wire segment 41 used to connect two third flat wires 213 in a same circle of flat wires is a third cross-wire segment 413.

In the U-phase winding, a cross-layer welding segment 42 used to connect two first flat wires 211 in a same circle of flat wires is a first welding segment 421. A cross-layer welding segment 42 used to connect two second flat wires 212 in a same circle of flat wires is a second welding segment 422. A cross-layer welding segment 42 used to connect two third flat wires 213 in a same circle of flat wires is a third welding segment 423. A cross-layer welding segment 42 used to connect two third flat wires 213 in different circles of flat wires is a sixth welding segment 426. A cross-layer welding segment 42 used to connect one first flat wire 211 and one second flat wire 212 in different circles of flat wires is a seventh welding segment 427. A cross-layer welding segment 42 used to connect one first flat wire 211 and one second flat wire 212 in a same circle of flat wires is an eighth welding segment 428.

In some embodiments, in the same circle of flat wires, a number of stator slots crossed by the first cross-wire segment 411, a number of stator slots crossed by the second cross-wire segment 412, and a number of stator slots crossed by the third cross-wire segment 413 are the same, and in the same circle of flat wires, wire types of the first cross-wire segment 411, the second cross-wire segment 412, and the third cross-wire segment 413 are the same. This helps reduce a number of wire types of the flat wires 21, and simplify a structure of the stator winding 2 and a manufacturing process of the stator winding 2.

Refer to FIG. 12. The number of stator slots crossed by the first cross-wire segment 411, the number of stator slots crossed by the second cross-wire segment 412, and the number of stator slots crossed by the third cross-wire segment 413 in the same circle of flat wires are 4.

Compared with a flat wire motor whose number of slots per pole per phase is 2, the flat wire motor provided in this application reduces the number of stator slots crossed by the first cross-wire segment 411, the number of stator slots crossed by the second cross-wire segment 412, and the number of stator slots crossed by the third cross-wire segment 413, so that an end portion length of the stator winding 2 is reduced. The end portion length of the stator winding 2 is a dimension, in the axial direction of the motor stator 101, of an end portion that is of the stator winding 2 and that is exposed to the stator core 1.

In some embodiments, in the same circle of flat wires, wire types of the first cross-wire segment 411, the second cross-wire segment 412, and the third cross-wire segment 413 are the same, but wire types of first cross-wire segments 411 of different circles of flat wires are different, wire types of second cross-wire segments 412 of different circles of flat wires are different, and wire types of third cross-wire segments 413 of different circles of flat wires are different. Therefore, in the U-phase winding in FIG. 12, there are four wire types of the first cross-wire segment 411, the second cross-wire segment 412, and the third cross-wire segment 413.

In the embodiment shown in FIG. 12, there are four wire types of the first cross-wire segment 411, the second cross-wire segment 412, and the third cross-wire segment 413. Therefore, there are four wire types of Upin hairpin wires of the U-phase winding.

Refer to FIG. 12. Each Upin hairpin wire includes a flat wire 21 accommodated in a stator slot 11 and a cross-layer cross-wire segment 41 and a cross-layer welding segment 42 that are located outside the stator slot 11. Each Upin hairpin wire has two flat wires 21 accommodated in stator slots 11, and the two flat wires 21 are respectively inserted into two different stator slots 11. The Upin hairpin wire connects the two flat wires 21 through the cross-layer cross-wire segment 41.

In the embodiment shown in FIG. 12, Upin hairpin wires at the layers are independent of each other, there is no need for an additional cross-layer hairpin wire, and fully automatic wire insertion is implemented by using independent wire cups, thereby simplifying a manufacturing process and facilitating mass production.

In some embodiments, in the U-phase winding, a same-layer connection segment 5 used to connect the 8^{th} layer of flat wires of the 33^{rd} stator slot and the 8^{th} layer of flat wires of the 1^{st} stator slot is located at the welding end 62 of the stator winding 2. In the embodiment shown in FIG. 12, the same-layer connection segment 5 crosses four stator slots.

In some embodiments, in the U-phase winding, a number of stator slots crossed by the first welding segment 421, a number of stator slots crossed by the second welding segment 422, a number of stator slots crossed by the third welding segment 423, and a number of stator slots crossed by the sixth welding segment 426 are the same. This facilitates more orderly wiring at the welding end 62 of the stator winding 2, and facilitates structure symmetry of the stator winding 2, to improve NVH performance of the flat wire motor.

In the embodiment shown in FIG. 12, the number of stator slots crossed by the first welding segment 421, the number of stator slots crossed by the second welding segment 422, the number of stator slots crossed by the third welding segment 423, and the number of stator slots crossed by the sixth welding segment 426 are all 5.

In some embodiments, a difference between a number of stator slots crossed by the seventh welding segment 427 and the number of stator slots crossed by the first welding segment 421 is 1. A difference between a number of stator slots crossed by the eighth welding segment 428 and the number of stator slots crossed by the first welding segment 421 is 1. Connections between flat wires 21 in a same circle of flat wires have different spans. This helps form a short-pitch winding, thereby reducing a harmonic winding factor and improving NVH performance of the flat wire motor.

In the embodiment shown in FIG. 12, the number of stator slots crossed by the first welding segment 421 is 5, the number of stator slots crossed by the seventh welding segment 427 is 4, and the number of stator slots crossed by the eighth welding segment 428 is 6.

In the embodiment shown in FIG. 7 of this application, both a flat wire distribution manner of the W-phase winding and a flat wire distribution manner of the V-phase winding are the same as a flat wire distribution manner of the U-phase winding. Therefore, in the embodiment shown in FIG. 12, both a flat wire connection manner of the W-phase winding and a flat wire connection manner of the V-phase winding are the same as a flat wire connection manner of the U-phase winding, and the flat wire connection manner of the W-phase winding and the flat wire connection manner of the V-phase winding may be obtained by translating the flat wire connection manner of the U-phase winding. Details are not described herein in this application.

FIG. 13 is a connection diagram 1 of the U-phase winding in FIG. 8. Refer to FIG. 13. A lead-in wire 71 and a lead-out wire 72 of the U-phase winding are located at the crown end 61 of the stator winding 2, and the lead-in wire 71 and the lead-out wire 72 of the U-phase winding each have one type of Ipin.

In the embodiment shown in FIG. 13, the stator winding 2 includes a first circle of flat wires 31, a second circle of flat wires 32, a third circle of flat wires 33, and a fourth circle of flat wires 34. The first circle of flat wires 31, the third circle of flat wires 33, the fourth circle of flat wires 34, and the second circle of flat wires 32 are sequentially arranged in the radial direction (as shown in the direction B in FIG. 13) of the motor stator 101.

The third circle of flat wires 33 and the fourth circle of flat wires 34 are located between the first circle of flat wires 31 and the second circle of flat wires 32. A distance between the third circle of flat wires 33 and an axis of the motor stator 101 is greater than a distance between the fourth circle of flat wires 34 and the axis of the motor stator 101. That is, the third circle of flat wires 33 is closer to the first circle of flat wires 31 than the fourth circle of flat wires 34. The fourth circle of flat wires 34 is closer to the second circle of flat wires 32 than the third circle of flat wires 33.

A branch of the U-phase winding uses the 1^{st} layer of the 1^{st} stator slot as a lead-in end, and the lead-in wire 71 is configured to connect the 1^{st} layer of flat wires in the 1^{st} stator slot. The lead-in wire enters from the 1^{st} layer of the 1^{st} stator slot, exits from the 2^{nd} layer of the 6^{th} stator slot, then enters from the 1^{st} layer of the 10^{th} stator slot, exits from the 2^{nd} layer of the 15^{th} stator slot, then enters from the 1^{st} layer of the 19^{th} stator slot, exits from the 2^{nd} layer of the 24^{th} stator slot, then enters from the 1^{st} layer of the 28^{th} stator slot, and exits from the 2^{nd} layer of the 33^{rd} stator slot. In this way, the first flat wire 211 in the first circle of flat wires 31 is connected in a traversal manner.

Then, the lead-in wire enters from the 3^{rd} layer of the 1^{st} stator slot, exits from the 4^{th} layer of the 6^{th} stator slot, then enters from the 3^{rd} layer of the 10^{th} stator slot, exits from the 4^{th} layer of the 15^{th} stator slot, then enters from the 3^{rd} layer of the 19^{th} stator slot, exits from the 4^{th} layer of the 24^{th} stator slot, then enters from the 3^{rd} layer of the 28^{th} stator slot, and exits from the 4^{th} layer of the 33^{rd} stator slot. In this way, the first flat wire 211 in the first circle of flat wires 31 and the first flat wire 211 in the third circle of flat wires 33 are connected in a traversal manner.

Then, the lead-in wire enters from the 5^{th} layer of the 1^{st} stator slot, exits from the 6^{th} layer of the 6^{th} stator slot, then enters from the 5^{th} layer of the 10^{th} stator slot, exits from the 6^{th} layer of the 15^{th} stator slot, then enters from the 5^{th} layer of the 19^{th} stator slot, exits from the 6^{th} layer of the 24^{th} stator slot, then enters from the 5^{th} layer of the 28^{th} stator slot, and exits from the 6^{th} layer of the 33^{rd} stator slot. In this way, the first flat wire 211 in the first circle of flat wires 31, the first flat wire 211 in the third circle of flat wires 33, and the first flat wire 211 in the fourth circle of flat wires 34 are connected in a traversal manner.

Then, the first branch lead-in wire enters from the 7^{th} layer of the 1^{st} stator slot, exits from the 8^{th} layer of the 6^{th} stator slot, then enters from the 7^{th} layer of the 10^{th} stator slot, exits from the 8^{th} layer of the 15^{th} stator slot, then enters from the 7^{th} layer of the 19^{th} stator slot, exits from the 8^{th} layer of the 24^{th} stator slot, then enters from the 7^{th} layer of the 28^{th} stator slot, and exits from the 8^{th} layer of the 33^{rd} stator slot. In this way, the first flat wire 211 in the U-phase winding is connected in a traversal manner.

Then, the lead-in wire enters from the 8^{th} layer of the 2^{nd} stator slot, exits from the 7^{th} layer of the 33^{rd} stator slot, then enters from the 8^{th} layer of the 29^{th} stator slot, exits from the 7^{th} layer of the 24^{th} stator slot, then enters from the 8^{th} layer of the 20^{th} stator slot, exits from the 7^{th} layer of the 15^{th} stator slot, then enters from the 8^{th} layer of the 11^{th} stator slot, and exits from the 7^{th} layer of the 6^{th} stator slot. In this way, the first flat wire 211 in the U-phase winding and the third flat wire 213 in the second circle of flat wires 32 are connected in a traversal manner.

Then, the lead-in wire enters from the 6^{th} layer of the 2^{nd} stator slot, exits from the 5^{th} layer of the 33^{rd} stator slot, then enters from the 6^{th} layer of the 29^{th} stator slot, exits from the 5^{th} layer of the 24^{th} stator slot, then enters from the 6^{th} layer of the 20^{th} stator slot, exits from the 5^{th} layer of the 15^{th} stator slot, then enters from the 6^{th} layer of the 11^{th} stator slot, and exits from the 5^{th} layer of the 6^{th} stator slot. In this way, the first flat wire 211 in the U-phase winding, the third flat wire 213 in the second circle of flat wires 32, and the third flat wire 213 in the fourth circle of flat wires 34 are connected in a traversal manner.

Then, the lead-in wire enters from the 4^{th} layer of the 2^{nd} stator slot, exits from the 3^{rd} layer of the 33^{rd} stator slot, then enters from the 4^{th} layer of the 29^{th} stator slot, exits from the 3^{rd} layer of the 24^{th} stator slot, then enters from the 4^{th} layer of the 20^{th} stator slot, exits from the 3^{rd} layer of the 15^{th} stator slot, then enters from the 4^{th} layer of the 11^{th} stator slot, and exits from the 3^{rd} layer of the 6^{th} stator slot. In this way, the first flat wire 211 in the U-phase winding, the third flat wire 213 in the second circle of flat wires 32, the third flat wire 213 in the fourth circle of flat wires 34, and the third flat wire 213 in the third circle of flat wires 33 are connected in a traversal manner.

Then, the lead-in wire enters from the 2^{nd} layer of the 2^{nd} stator slot, exits from the 1^{st} layer of the 33^{rd} stator slot, then enters from the 2^{nd} layer of the 29^{th} stator slot, exits from the 1^{st} layer of the 24^{th} stator slot, then enters from the 2^{nd} layer of the 20^{th} stator slot, exits from the 1^{st} layer of the 15^{th} stator slot, then enters from the 2^{nd} layer of the 11^{th} stator slot, and exits from the 1^{st} layer of the 6^{th} stator slot. In this way, the first flat wire 211 and the third flat wire 213 in the U-phase winding are connected in a traversal manner.

Then, the lead-in wire enters from the 1^{st} layer of the 2^{nd} stator slot, exits from the 2^{nd} layer of the 7^{th} stator slot, then enters from the 1^{st} layer of the 11^{th} stator slot, exits from the 2^{nd} layer of the 16^{th} stator slot, then enters from the 1^{st} layer of the 20^{th} stator slot, exits from the 2^{nd} layer of the 25^{th} stator slot, then enters from the 1^{st} layer of the 29^{th} stator slot, and exits from the 2^{nd} layer of the 34^{th} stator slot. In this way, the first flat wire 211 and the third flat wire 213 in the U-phase winding, and the second flat wire 212 in the first circle of flat wires 31 are connected in a traversal manner.

Then, the lead-in wire enters from the 3^{rd} layer of the 2^{nd} stator slot, exits from the 4^{th} layer of the 7^{th} stator slot, then enters from the 3^{rd} layer of the 11^{th} stator slot, exits from the 4^{th} layer of the 16^{th} stator slot, then enters from the 3^{rd} layer of the 20^{th} stator slot, exits from the 4^{th} layer of the 25^{th} stator slot, then enters from the 3^{rd} layer of the 29^{th} stator slot, and exits from the 4^{th} layer of the 34^{th} stator slot. In this way, the first flat wire 211 and the third flat wire 213 in the U-phase winding, the second flat wire 212 in the first circle of flat wires 31, and the second flat wire 212 in the third circle of flat wires 33 are connected in a traversal manner.

Then, the lead-in wire enters from the 5^{th} layer of the 2^{nd} stator slot, exits from the 6^{th} layer of the 7^{th} stator slot, then enters from the 5^{th} layer of the 11^{th} stator slot, exits from the 6^{th} layer of the 16^{th} stator slot, then enters from the 5^{th} layer of the 20^{th} stator slot, exits from the 6^{th} layer of the 25^{th} stator slot, then enters from the 5^{th} layer of the 29^{th} stator slot, and exits from the 6^{th} layer of the 34^{th} stator slot. In this way, the first flat wire 211 and the third flat wire 213 in the U-phase winding, the second flat wire 212 in the first circle of flat wires 31, the second flat wire 212 in the third circle of flat wires 33, and the second flat wire 212 in the fourth circle of flat wires 34 are connected in a traversal manner.

Then, the lead-in wire enters from the 7^{th} layer of the 2^{nd} stator slot, exits from the 8^{th} layer of the 7^{th} stator slot, then enters from the 7^{th} layer of the 11^{th} stator slot, exits from the 8^{th} layer of the 16^{th} stator slot 11, then enters from the 7^{th} layer of the 20^{th} stator slot, exits from the 8^{th} layer of the 25^{th} stator slot, then enters from the 7^{th} layer of the 29^{th} stator slot, and exits from the 8^{th} layer of the 34^{th} stator slot. In this way, the flat wires 21 in the U-phase winding are connected in a traversal manner, the 8^{th} layer of the 33^{rd} stator slot is used as a lead-out end of the branch of the U-phase winding, and the lead-out wire 72 is configured to connect the 8^{th} layer of flat wires of the 34^{th} stator slot.

In the embodiment shown in FIG. 13, when the phase spreads are symmetrically distributed, the flat wires 21 in the U-phase windings are connected in a traverse manner, so that the three-phase winding maintains electromotive force balance, and a risk of a circulating current between branches is reduced.

In the U-phase winding, the cross-layer connection segment 4 located at the crown end is referred to as a cross-layer cross-wire segment 41, and the cross-layer connection segment 4 located at the welding segment is referred to as a cross-layer welding segment 42.

In the U-phase winding, a cross-layer cross-wire segment 41 used to connect two first flat wires 211 in a same circle of flat wires is a first cross-wire segment 411. A cross-layer cross-wire segment 41 used to connect two second flat wires 212 in a same circle of flat wires is a second cross-wire segment 412. A cross-layer cross-wire segment 41 used to connect two third flat wires 213 in a same circle of flat wires is a third cross-wire segment 413. A cross-layer cross-wire segment 41 used to connect two first flat wires 211 in different circles of flat wires is a fourth cross-wire segment 414. A cross-layer cross-wire segment 41 used to connect two second flat wires 212 in different circles of flat wires is a fifth cross-wire segment 415. A cross-layer cross-wire segment 41 used to connect two third flat wires 213 in different circles of flat wires is a sixth cross-wire segment 416.

In the U-phase winding, a same-layer connection segment 5 used to connect a first flat wire 211 and a third flat wire 213 in a same layer of flat wires is located at the crown end 61. Therefore, the same-layer connection segment 5 used to connect the first flat wire 211 and the third flat wire 213 is a first same-layer cross-wire segment 51. A same-layer connection segment 5 used to connect a second flat wire 212 and a third flat wire 213 in a same layer of flat wires is located at the crown end 61. Therefore, the same-layer connection segment 5 used to connect the second flat wire 212 and the third flat wire 213 is a second same-layer cross-wire segment.

In the U-phase winding, a cross-layer welding segment 42 used to connect two first flat wires 211 is a first welding segment 421, a cross-layer welding segment 42 used to connect two second flat wires 212 is a second welding segment 422, and a cross-layer welding segment 42 used to connect two third flat wires 213 is a third welding segment 423.

In some embodiments, a number of stator slots crossed by the first welding segment 421, a number of stator slots crossed by the second welding segment 422, and a number of stator slots crossed by the third welding segment 423 are the same. This facilitates more orderly wiring at the welding end 62 of the stator winding 2, and facilitates structure symmetry of the stator winding 2, to improve NVH performance of the flat wire motor.

In the embodiment shown in FIG. 13, the number of stator slots crossed by the first welding segment 421, the number of stator slots crossed by the second welding segment 422, and the number of stator slots crossed by the third welding segment 423 are all 5.

In some embodiments, in the same circle of flat wires, a number of stator slots crossed by the first cross-wire segment 411, a number of stator slots crossed by the second cross-wire segment 412, and a number of stator slots crossed by the third cross-wire segment 413 are the same, and in the same circle of flat wires, wire types of the first cross-wire segment 411, the second cross-wire segment 412, and the third cross-wire segment 413 are the same. This helps reduce a number of wire types of the flat wires 21, and simplify a structure of the stator winding 2 and a manufacturing process of the stator winding 2.

In the embodiment shown in FIG. 13, the number of stator slots crossed by the first cross-wire segment 411, the number of stator slots crossed by the second cross-wire segment 412, and the number of stator slots crossed by the third cross-wire segment 413 in the same circle of flat wires are all 4.

Compared with a flat wire motor whose number of slots per pole per phase is 2, the flat wire motor provided in this application reduces the number of stator slots crossed by the first cross-wire segment 411, the number of stator slots crossed by the second cross-wire segment 412, and the number of stator slots crossed by the third cross-wire segment 413, so that an end portion length of the stator winding 2 is reduced. The end portion length of the stator winding 2 is a dimension, in the axial direction of the motor stator 101, of an end portion that is of the stator winding 2 and that is exposed to the stator core 1.

In some embodiments, in the same circle of flat wires, wire types of the first cross-wire segment 411, the second cross-wire segment 412, and the third cross-wire segment 413 are the same, but wire types of first cross-wire segments 411 of different circles of flat wires are different, wire types of second cross-wire segments 412 of different circles of flat wires are different, and wire types of third cross-wire segments 413 of different circles of flat wires are different. Therefore, in the U-phase winding in FIG. 13, there are a total of four wire types of the first cross-wire segment 411, the second cross-wire segment 412, and the third cross-wire segment 413.

Refer to FIG. 13. A fourth cross-wire segment 414 used to connect two first flat wires 211 in the first circle of flat wires 31 and the third circle of flat wires 33, a fifth cross-wire segment 415 used to connect two second flat wires 212 in the first circle of flat wires 31 and the third circle of flat wires 33, and a sixth cross-wire segment 416 used to connect two third flat wires 213 in the first circle of flat wires 31 and the third circle of flat wires 33 are of a same wire type, and all cross four stator slots.

A fourth cross-wire segment 414 used to connect two first flat wires 211 in the third circle of flat wires 33 and the fourth circle of flat wires 34, a fifth cross-wire segment 415 used to connect two second flat wires 212 in the third circle of flat wires 33 and the fourth circle of flat wires 34, and a sixth cross-wire segment 416 used to connect two third flat wires 213 in the third circle of flat wires 33 and the fourth circle of flat wires 34 are of a same wire type, and all cross four stator slots.

A fourth cross-wire segment 414 used to connect two first flat wires 211 in the second circle of flat wires 32 and the fourth circle of flat wires 34, a fifth cross-wire segment 415 used to connect two second flat wires 212 in the second circle of flat wires 32 and the fourth circle of flat wires 34, and a sixth cross-wire segment 416 used to connect two third flat wires 213 in the second circle of flat wires 32 and the fourth circle of flat wires 34 are of a same wire type, and all cross four stator slots.

A fourth cross-wire segment 414 used to connect two first flat wires 211 of the first circle of flat wires 31 and the second circle of flat wires 32, a fourth cross-wire segment 414 used to connect two first flat wires 211 of the second circle of flat wires 32 and the third circle of flat wires 33, and a fourth cross-wire segment 414 used to connect two first flat wires 211 of the third circle of flat wires 33 and the fourth circle of flat wires 34 cross a same number of stator slots but have different wire types. Therefore, the fourth cross-wire segments 414 of the U-phase winding have three wire types.

In a same circle of flat wires, wire types of the fourth cross-wire segment 414, the fifth cross-wire segment 415, and the sixth cross-wire segment 416 are the same. Therefore, the fourth cross-wire segment 414, the fifth cross-wire segment 415, and the sixth cross-wire segment 416 of the U-phase winding have three wire types.

Refer to FIG. 13. The first same-layer cross-wire segment 51 is used to connect one first flat wire 211 and one third flat wire 213 at the 8^{th} layer of the second circle of flat wires 32. The second same-layer cross-wire segment 52 is used to connect one second flat wire 212 and one third flat wire 213 at the 1^{st} layer of the first circle of flat wires 31.

In some embodiments, a difference between a number of stator slots crossed by the first same-layer cross-wire segment 51 and a number of stator slots crossed by the second same-layer cross-wire segment is 1. In the embodiment shown in FIG. 13, the 8^{th} layer of flat wires of the 33^{rd} stator slot is connected to the 8^{th} layer of flat wires of the 2^{nd} stator slot through a first same-layer cross-wire segment 51. The 1^{st} layer of flat wires of the 6^{th} stator slot is connected to the 1^{st} layer of flat wires of the 2^{nd} stator slot through a second same-layer cross-wire segment 52. A number of stator slots crossed by the first same-layer cross-wire segment 51 is 5, and a number of stator slots crossed by the second same-layer cross-wire segment 52 is 4.

In the embodiment shown in FIG. 13, there are two wire types in total for the first same-layer cross-wire segment 51 and the second same-layer cross-wire segment 52. There are three wire types of cross-wire segments used to connect two adjacent circles. There is one wire type of cross-wire segments used to connect a same circle, and there are four wire types in total for cross-wire segments in four circles of flat wires. Therefore, there are nine wire types of Upin hairpin wires.

Each Upin hairpin wire includes a flat wire 21 accommodated in a stator slot 11 and a cross-layer cross-wire segment 41 and a cross-layer welding segment 42 that are located outside the stator slot 11. Each Upin hairpin wire has two flat wires 21 accommodated in stator slots 11, and the two flat wires 21 are respectively inserted into two different stator slots 11. The Upin hairpin wire connects the two flat wires 21 through the cross-layer cross-wire segment 41.

In the embodiment shown in FIG. 13, Upin hairpin wires at the layers are independent of each other, there is no need for an additional cross-layer hairpin wire, and fully automatic wire insertion is implemented by using independent wire cups, thereby simplifying a manufacturing process and facilitating mass production.

In the embodiment shown in FIG. 8 of this application, both a flat wire distribution manner of the W-phase winding and a flat wire distribution manner of the V-phase winding are the same as a flat wire distribution manner of the U-phase winding. Therefore, in the embodiment shown in FIG. 13, both a flat wire connection manner of the W-phase winding and a flat wire connection manner of the V-phase winding are the same as a flat wire connection manner of the U-phase winding, and the flat wire connection manner of the W-phase winding and the flat wire connection manner of the V-phase winding may be obtained by translating the flat wire connection manner of the U-phase winding. Details are not described herein in this application.

FIG. 14 is a connection diagram 2 of the U-phase winding in FIG. 8. A wave winding connection manner of the U-phase winding in the embodiment shown in FIG. 14 is the same as the wave winding connection manner of the U-phase winding in the embodiment shown in FIG. 13. Details are not described herein in this application. Different from the embodiment shown in FIG. 13, in the embodiment shown in FIG. 14, the lead-in wire 71 and the lead-out wire 72 of the U-phase winding are located at the welding end of the stator winding 2.

In the U-phase winding, a cross-layer cross-wire segment 41 used to connect two first flat wires 211 in a same circle of flat wires is a first cross-wire segment 411. A cross-layer cross-wire segment 41 used to connect two second flat wires 212 in a same circle of flat wires is a second cross-wire segment 412. A cross-layer cross-wire segment 41 used to connect two third flat wires 213 in a same circle of flat wires is a third cross-wire segment 413.

In the U-phase winding, a same-layer connection segment 5 used to connect a first flat wire 211 and a third flat wire 213 in a same layer of flat wires is located at the welding segment. Therefore, the same-layer connection segment 5 used to connect the first flat wire 211 and the third flat wire 213 is a first same-layer welding segment 53. A same-layer connection segment 5 used to connect a second flat wire 212 and a third flat wire 213 in a same layer of flat wires is located at the welding end. Therefore, the same-layer connection segment 5 used to connect the second flat wire 212 and the third flat wire 213 is a second same-layer welding segment 54.

In the U-phase winding, a cross-layer welding segment 42 used to connect two first flat wires 211 in a same circle of flat wires is a first welding segment 421. A cross-layer welding segment 42 used to connect two second flat wires 212 in a same circle of flat wires is a second welding segment 422. A cross-layer welding segment 42 used to connect two third flat wires 213 in a same circle of flat wires is a third welding segment 423. A cross-layer welding segment 42 used to connect two first flat wires 211 in different circles of flat wires is a fourth welding segment 424. A cross-layer welding segment 42 used to connect two second flat wires 212 in different circles of flat wires is a fifth welding segment 425. A cross-layer welding segment 42 used to connect two third flat wires 213 in different circles of flat wires is a sixth welding segment 426.

In some embodiments, in the same circle of flat wires, a number of stator slots crossed by the first cross-wire segment 411, a number of stator slots crossed by the second cross-wire segment 412, and a number of stator slots crossed by the third cross-wire segment 413 are the same, and in the same circle of flat wires, wire types of the first cross-wire segment 411, the second cross-wire segment 412, and the third cross-wire segment 413 are the same. This helps reduce a number of wire types of the flat wires 21, and simplify a structure of the stator winding 2 and a manufacturing process of the stator winding 2.

Refer to FIG. 14. The number of stator slots crossed by the first cross-wire segment 411, the number of stator slots crossed by the second cross-wire segment 412, and the number of stator slots crossed by the third cross-wire segment 413 in the same circle of flat wires are 5.

Compared with a flat wire motor whose number of slots per pole per phase is 2, the flat wire motor provided in this application reduces the numbers of stator slots crossed by the first cross-wire segment 411, the second cross-wire segment 412, and the third cross-wire segment 413, so that an end portion length of the stator winding 2 is reduced. The end portion length of the stator winding 2 is a dimension, in the axial direction of the motor stator 101, of an end portion that is of the stator winding 2 and that is exposed to the stator core 1.

In some embodiments, in the same circle of flat wires, wire types of the first cross-wire segment 411, the second cross-wire segment 412, and the third cross-wire segment 413 are the same, but wire types of first cross-wire segments 411 of different circles of flat wires are different, wire types of second cross-wire segments 412 of different circles of flat wires are different, and wire types of third cross-wire segments 413 of different circles of flat wires are different. Therefore, in the U-phase winding in FIG. 14, there are a total of four wire types of the first cross-wire segment 411, the second cross-wire segment 412, and the third cross-wire segment 413.

In the embodiment shown in FIG. 14, there is one wire type of a cross-wire segment used to connect a same circle of flat wires, and there are a total of four wire types of four circles of flat wires. Therefore, there are four wire types of Upin hairpin wires of the U-phase winding.

Each Upin hairpin wire includes a flat wire 21 accommodated in a stator slot 11 and a cross-layer cross-wire segment 41 and a cross-layer welding segment 42 that are located outside the stator slot 11. Each Upin hairpin wire has two flat wires 21 accommodated in stator slots 11, and the two flat wires 21 are respectively inserted into two different stator slots 11. The Upin hairpin wire connects the two flat wires 21 through the cross-layer cross-wire segment 41.

In the embodiment shown in FIG. 14, Upin hairpin wires at the layers are independent of each other, there is no need for an additional cross-layer hairpin wire, and fully automatic wire insertion is implemented by using independent wire cups, thereby simplifying a manufacturing process and facilitating mass production.

In some embodiments, the first same-layer welding segment 53 is used to connect one first flat wire 211 and one third flat wire 213 at the 8^{th} layer of the second circle of flat wires 32. The second same-layer welding segment 54 is used to connect one second flat wire 212 and one third flat wire 213 at the 1^{st} layer of the first circle of flat wires 31.

In some embodiments, a difference between a number of stator slots crossed by the first same-layer welding segment 53 and a number of stator slots crossed by the second same-layer welding segment 54 is 1.

In the embodiment shown in FIG. 14, the 8^{th} layer of flat wires of the 33^{rd} stator slot is connected to the 8^{th} layer of flat wires of the 2^{nd} stator slot through a first same-layer welding segment 53. The 1^{st} layer of flat wires of the 6^{th} stator slot is connected to the 1^{st} layer of flat wires of the 2^{nd} stator slot through a second same-layer welding segment 54. A number of stator slots crossed by the first same-layer welding segment 53 is 5, and a number of stator slots crossed by the second same-layer welding segment 54 is 4.

In some embodiments, in a same circle of flat wires, a number of stator slots crossed by the first welding segment 421, a number of stator slots crossed by the second welding segment 422, and a number of stator slots crossed by the third welding segment 423 are the same. This facilitates more orderly wiring at the welding end 62 of the stator winding 2, and facilitates structure symmetry of the stator winding 2, to improve NVH performance of the flat wire motor.

In the embodiment shown in FIG. 14, in the same circle of flat wires, the number of stator slots crossed by the first welding segment 421, the number of stator slots crossed by the second welding segment 422, and the number of stator slots crossed by the third welding segment 423 are all 4.

In some embodiments, a number of stator slots crossed by the fourth welding segment 424, a number of stator slots crossed by the fifth welding segment 425, and a number of stator slots crossed by the sixth welding segment 426 are the same. This facilitates more orderly wiring at the welding end 62 of the stator winding 2, and facilitates structure symmetry of the stator winding 2, to improve NVH performance of the flat wire motor.

In the embodiment shown in FIG. 14, the number of stator slots crossed by the fourth welding segment 424 used to connect two first flat wires 211 of two adjacent circles of flat wires, the number of stator slots crossed by the fifth welding segment 425 used to connect two second flat wires 212 of two adjacent circles of flat wires, and the number of stator slots crossed by the fourth welding segment 424 used to connect two third flat wires 213 of two adjacent circles of flat wires are all 4.

In the embodiment shown in FIG. 8 of this application, both a flat wire distribution manner of the W-phase winding and a flat wire distribution manner of the V-phase winding are the same as a flat wire distribution manner of the U-phase winding. Therefore, in the embodiment shown in FIG. 14, both a flat wire connection manner of the W-phase winding and a flat wire connection manner of the V-phase winding are the same as a flat wire connection manner of the U-phase winding, and the flat wire connection manner of the W-phase winding and the flat wire connection manner of the V-phase winding may be obtained by translating the flat wire connection manner of the U-phase winding. Details are not described herein in this application.

FIG. 15 is a connection diagram 3 of the U-phase winding in FIG. 8. Refer to FIG. 15. A lead-in wire 71 and a lead-out wire 72 of the U-phase winding are located at the crown end 61 of the stator winding 2, and the lead-in wire 71 and the lead-out wire 72 of the U-phase winding are located at a same layer. The lead-in wire 71 and the lead-out wire 72 of the U-phase winding each have one type of Ipin.

In the embodiment shown in FIG. 15, the stator winding 2 includes a first circle of flat wires 31, a second circle of flat wires 32, a third circle of flat wires 33, and a fourth circle of flat wires 34. The first circle of flat wires 31, the third circle of flat wires 33, the fourth circle of flat wires 34, and the second circle of flat wires 32 are sequentially arranged in the radial direction (as shown in the direction B in FIG. 15) of the motor stator 101.

The third circle of flat wires 33 and the fourth circle of flat wires 34 are located between the first circle of flat wires 31 and the second circle of flat wires 32. A distance between the third circle of flat wires 33 and an axis of the motor stator 101 is greater than a distance between the fourth circle of flat wires 34 and the axis of the motor stator 101. That is, the third circle of flat wires 33 is closer to the first circle of flat wires 31 than the fourth circle of flat wires 34. The fourth circle of flat wires 34 is closer to the second circle of flat wires 32 than the third circle of flat wires 33.

A branch of the U-phase winding uses the 1^{st} layer of the 1^{st} stator slot as a lead-in end, and the lead-in wire 71 is configured to connect the 1^{st} layer of flat wires in the 1^{st} stator slot. The lead-in wire enters from the 1^{st} layer of the 1^{st} stator slot, exits from the 2^{nd} layer of the 6^{th} stator slot, then enters from the 1^{st} layer of the 10^{th} stator slot, exits from the 2^{nd} layer of the 15^{th} stator slot, then enters from the 1^{st} layer of the 19^{th} stator slot, exits from the 2^{nd} layer of the 24^{th} stator slot, then enters from the 1^{st} layer of the 28^{th} stator slot, exits from the 2^{nd} layer of the 33^{rd} stator slot, then enters from the 1^{st} layer of the 2^{nd} stator slot, exits from the 2^{nd} layer of the 7^{th} stator slot, then enters from the 1^{st} layer of the 11^{th} stator slot, exits from the 2^{nd} layer of the 16^{th} stator slot, then enters from the 1^{st} layer of the 20^{th} stator slot, exits from the 2^{nd} layer of the 25^{th} stator slot, then enters from the 1^{st} layer of the 29^{th} stator slot, and exits from the 2^{nd} layer of the 34^{th} stator slot. In this way, the first flat wire 211 and the second flat wire 212 in the first circle of flat wires 31 are connected in a traversal manner.

Then, the lead-in wire enters from the 3^{rd} layer of the 1^{st} stator slot, exits from the 4^{th} layer of the 6^{th} stator slot, then enters from the 3^{rd} layer of the 10^{th} stator slot, exits from the 4^{th} layer of the 15^{th} stator slot, then enters from the 3^{rd} layer of the 19^{th} stator slot, exits from the 4^{th} layer of the 24^{th} stator slot, then enters from the 3^{rd} layer of the 28^{th} stator slot, exits from the 4^{th} layer of the 33^{rd} stator slot, then enters from the 3^{rd} layer of the 2^{nd} stator slot, exits from the 4^{th} layer of the 7^{th} stator slot, then enters from the 3^{rd} layer of the 11^{th} stator slot, exits from the 4^{th} layer of the 16^{th} stator slot, then enters from the 3^{rd} layer of the 20^{th} stator slot, exits from the 4^{th} layer of the 25^{th} stator slot, then enters from the 3^{rd} layer of the 29^{th} stator slot, and exits from the 4^{th} layer of the 34^{th} stator slot. In this way, the first flat wires 211 and the second flat wires 212 in the first circle of flat wires 31 and the third circle of flat wires 33 are connected in a traversal manner.

Then, the lead-in wire enters from the 5^{th} layer of the 1^{st} stator slot, exits from the 6^{th} layer of the 6^{th} stator slot, then enters from the 5^{th} layer of the 10^{th} stator slot, exits from the 6^{th} layer of the 15^{th} stator slot, then enters from the 5^{th} layer of the 19^{th} stator slot, exits from the 6^{th} layer of the 24^{th} stator slot, then enters from the 5^{th} layer of the 28^{th} stator slot, exits from the 6^{th} layer of the 33^{rd} stator slot, then enters from the 5^{th} layer of the 2^{nd} stator slot, exits from the 6^{th} layer of the 7^{th} stator slot, then enters from the 5^{th} layer of the 11^{th} stator slot, exits from the 6^{th} layer of the 16^{th} stator slot, then enters from the 5^{th} layer of the 20^{th} stator slot, exits from the 6^{th} layer of the 25^{th} stator slot, then enters from the 5^{th} layer of the 29^{th} stator slot, and exits from the 6^{th} layer of the 34^{th} stator slot. In this way, the first flat wires 211 and the second flat wires 212 in the first circle of flat wires 31, the third circle of flat wires 33, and the fourth circle of flat wires 34 are connected in a traversal manner.

Then, the lead-in wire enters from the 7^{th} layer of the 1^{st} stator slot, exits from the 8^{th} layer of the 6^{th} stator slot, then enters from the 7^{th} layer of the 10^{th} stator slot, exits from the 8^{th} layer of the 15^{th} stator slot, then enters from the 7^{th} layer of the 19^{th} stator slot, exits from the 8^{th} layer of the 24^{th} stator slot, then enters from the 7^{th} layer of the 28^{th} stator slot, exits from the 8^{th} layer of the 33^{rd} stator slot, then enters from the 7^{th} layer of the 2^{nd} stator slot, exits from the 8^{th} layer of the 7^{th} stator slot, then enters from the 7^{th} layer of the 11^{th} stator slot, exits from the 8^{th} layer of the 16^{th} stator slot, then enters from the 7^{th} layer of the 20^{th} stator slot, exits from the 8^{th} layer of the 25^{th} stator slot, then enters from the 7^{th} layer of the 29^{th} stator slot, and exits from the 8^{th} layer of the 34^{th} stator slot. In this way, the first flat wire 211 and the second flat wire 212 in the U-phase winding are connected in a traversal manner.

Then, the lead-in wire enters from the 8^{th} layer of the 2^{nd} stator slot, exits from the 7^{th} layer of the 33^{rd} stator slot, then enters from the 8^{th} layer of the 29^{th} stator slot, exits from the 7^{th} layer of the 24^{th} stator slot, then enters from the 8^{th} layer of the 20^{th} stator slot, exits from the 7^{th} layer of the 15^{th} stator slot, then enters from the 8^{th} layer of the 11^{th} stator slot, and exits from the 7^{th} layer of the 6^{th} stator slot. In this way, the first flat wire 211 and the second flat wire 212 in the U-phase winding, and the third flat wire 213 in the second circle of flat wires 32 are connected in a traversal manner.

Then, the lead-in wire enters from the 6^{th} layer of the 2^{nd} stator slot, exits from the 5^{th} layer of the 33^{rd} stator slot, then enters from the 6^{th} layer of the 29^{th} stator slot, exits from the 5^{th} layer of the 24^{th} stator slot, then enters from the 6^{th} layer of the 20^{th} stator slot, exits from the 5^{th} layer of the 15^{th} stator slot, then enters from the 6^{th} layer of the 11^{th} stator slot, and exits from the 5^{th} layer of the 6^{th} stator slot. In this way, the first flat wire 211 and the second flat wire 212 in the U-phase winding, and the third flat wires 213 in the second circle of flat wires 32 and the fourth circle of flat wires 34 are connected in a traverse manner.

Then, the lead-in wire enters from the 4^{th} layer of the 2^{nd} stator slot, exits from the 3^{rd} layer of the 33^{rd} stator slot, then enters from the 4^{th} layer of the 29^{th} stator slot, exits from the 3^{rd} layer of the 24^{th} stator slot, then enters from the 4^{th} layer of the 20^{th} stator slot, exits from the 3^{rd} layer of the 15^{th} stator slot, then enters from the 4^{th} layer of the 11^{th} stator slot, and exits from the 3^{rd} layer of the 6^{th} stator slot. In this way, the first flat wire 211 and the second flat wire 212 in the U-phase winding, and the third flat wires 213 in the second circle of flat wires 32, the fourth circle of flat wires 34, and the third circle of flat wires 33 are connected in a traversal manner.

Then, the lead-in wire enters from the 2^{nd} layer of the 2^{nd} stator slot, exits from the 1^{st} layer of the 33^{rd} stator slot, then enters from the 2^{nd} layer of the 29^{th} stator slot, exits from the 1^{st} layer of the 24^{th} stator slot, then enters from the 2^{nd} layer of the 20^{th} stator slot, exits from the 1^{st} layer of the 15^{th} stator slot, then enters from the 2^{nd} layer of the 11^{th} stator slot, and exits from the 1^{st} layer of the 6^{th} stator slot. In this way, the flat wires 21 of the U-phase winding are connected in a traversal manner. The 1^{st} layer of the 6^{th} stator slot is used as a lead-out end of the branch of the U-phase winding, and the lead-out wire 72 is configured to connect the 1^{st} layer of flat wires in the 6^{th} stator slot.

In the embodiment shown in FIG. 15, when the phase spreads are symmetrically distributed, the flat wires 21 in the U-phase windings are connected in a traverse manner, so that the three-phase winding maintains electromotive force balance, and a risk of a circulating current between branches is reduced.

In the U-phase winding, the cross-layer connection segment 4 located at the crown end is referred to as a cross-layer cross-wire segment 41, and the cross-layer connection segment 4 located at the welding segment is referred to as a cross-layer welding segment 42.

In the U-phase winding, a cross-layer cross-wire segment 41 used to connect two first flat wires 211 in a same circle of flat wires is a first cross-wire segment 411. A cross-layer cross-wire segment 41 used to connect two second flat wires 212 in a same circle of flat wires is a second cross-wire segment 412. A cross-layer cross-wire segment 41 used to connect two third flat wires 213 in a same circle of flat wires is a third cross-wire segment 413. A cross-layer cross-wire segment 41 used to connect two third flat wires 213 in different circles of flat wires is a sixth cross-wire segment 416. A cross-layer cross-wire segment 41 used to connect a first flat wire 211 and a second flat wire 212 in different circles of flat wires is a seventh cross-wire segment 417. A cross-layer cross-wire segment 41 used to connect one first flat wire 211 and one second flat wire 212 in a same circle of flat wires is an eighth cross-wire segment 418.

In the U-phase winding, a cross-layer welding segment 42 used to connect two first flat wires 211 is a first welding segment 421. A cross-layer welding segment 42 used to connect two second flat wires 212 is a second welding segment 422. A cross-layer welding segment 42 used to connect two third flat wires 213 is a third welding segment 423.

In some embodiments, a number of stator slots crossed by the first welding segment 421, a number of stator slots crossed by the second welding segment 422, and a number of stator slots crossed by the third welding segment 423 are the same. This facilitates more orderly wiring at the welding end 62 of the stator winding 2, and facilitates structure symmetry of the stator winding 2, to improve NVH performance of the flat wire motor.

Refer to FIG. 15. The number of stator slots crossed by the first welding segment 421, the number of stator slots crossed by the second welding segment 422, and the number of stator slots crossed by the third welding segment 423 are all 5.

In some embodiments, in the same circle of flat wires, a number of stator slots crossed by the first cross-wire segment 411, a number of stator slots crossed by the second cross-wire segment 412, and a number of stator slots crossed by the third cross-wire segment 413 are the same, and in the same circle of flat wires, wire types of the first cross-wire segment 411, the second cross-wire segment 412, and the third cross-wire segment 413 are the same. This helps reduce a number of wire types of the flat wires 21, and simplify a structure of the stator winding 2 and a manufacturing process of the stator winding 2.

Refer to FIG. 15. The number of stator slots crossed by the first cross-wire segment 411, the number of stator slots crossed by the second cross-wire segment 412, and the number of stator slots crossed by the third cross-wire segment 413 in the same circle of flat wires are all 4.

Compared with a flat wire motor whose number of slots per pole per phase is 2, the flat wire motor provided in this application reduces the number of stator slots crossed by the first cross-wire segment 411, the number of stator slots crossed by the second cross-wire segment 412, and the number of stator slots crossed by the third cross-wire segment 413, so that an end portion length of the stator winding 2 is reduced. The end portion length of the stator winding 2 is a dimension, in the axial direction of the motor stator 101, of an end portion that is of the stator winding 2 and that is exposed to the stator core 1.

In some embodiments, in the same circle of flat wires, wire types of the first cross-wire segment 411, the second cross-wire segment 412, and the third cross-wire segment 413 are the same, but wire types of first cross-wire segments 411 of different circles of flat wires are different, wire types of second cross-wire segments 412 of different circles of flat wires are different, and wire types of third cross-wire segments 413 of different circles of flat wires are different. Therefore, in the U-phase winding in FIG. 15, there are a total of four wire types of the first cross-wire segment 411, the second cross-wire segment 412, and the third cross-wire segment 413.

Refer to FIG. 15. The 2^{nd} layer of flat wires of the 2^{nd} stator slot in the first circle of flat wires 31 is connected to the 3^{rd} layer of flat wires of the 6^{th} stator slot in the third circle of flat wires 33 through a sixth cross-wire segment 416. The 4^{th} layer of flat wires of the 2^{nd} stator slot in the third circle of flat wires 33 is connected to the 5^{th} layer of flat wires of the 6^{th} stator slot in the fourth circle of flat wires 34 through a sixth cross-wire segment 416. The 6^{th} layer of flat wires of the 2^{nd} stator slot in the fourth circle of flat wires 34 is connected to the 7^{th} layer of flat wires of the 6^{th} stator slot in the second circle of flat wires 32 through a sixth cross-wire segment 416. The three sixth cross-wire segments 416 cross a same number of stator slots but have different wire types, and there are three wire types. A number of stator slots crossed by each sixth cross-wire segment 416 is 4.

Refer to FIG. 15. The 2^{nd} layer of flat wires of the 34^{th} stator slot in the first circle of flat wires 31 is connected to the 3^{rd} layer of flat wires of the 1^{st} stator slot in the third circle of flat wires 33 through a seventh cross-wire segment 417. The 4^{th} layer of flat wires of the 34^{th} stator slot in the third circle of flat wires 33 is connected to the 5^{th} layer of flat wires of the 1^{st} stator slot in the fourth circle of flat wires 34 through a seventh cross-wire segment 417. The 6^{th} layer of flat wires of the 34^{th} stator slot in the fourth circle of flat wires 34 is connected to the 7^{th} layer of flat wires of the 1^{st} stator slot in the second circle of flat wires 32 through a seventh cross-wire segment 417. The three seventh cross-wire segments 417 cross a same number of stator slots but have different wire types, and there are three wire types. A number of stator slots crossed by each seventh cross-wire segment 417 is 3.

Refer to FIG. 15. The 2^{nd} layer of flat wires of the 33^{rd} stator slot is connected to the 1^{st} layer of flat wires of the 2^{nd} stator slot through an eighth cross-wire segment 418. The 4^{th} layer of flat wires of the 33^{rd} stator slot is connected to the 3^{rd} layer of flat wires of the 2^{nd} stator slot through an eighth cross-wire segment 418. The 6^{th} layer of flat wires of the 33^{rd} stator slot is connected to the 5^{th} layer of flat wires of the 2^{nd} stator slot through an eighth cross-wire segment 418. The 8^{th} layer of flat wires of the 33^{rd} stator slot is connected to the 7^{th} layer of flat wires of the 2^{nd} stator slot through an eighth cross-wire segment 418. The four seventh cross-wire segments 417 cross a same number of stator slots but have different wire types, and there are four wire types. A number of stator slots crossed by each eighth cross-wire segment 418 is 6.

Refer to FIG. 15. A same-layer connection segment 5 used to connect the 8^{th} layer of flat wires of the 34^{th} stator slot and the 8^{th} layer of flat wires of the 2^{nd} stator slot is located at the crown end 61 of the stator winding 2, a number of stator slots crossed by the same-layer connection segment 5 is 4, and there is one wire type.

In the embodiment shown in FIG. 15, there is one wire type of the same-layer connection segment 5, four wire types of the eighth cross-wire segment 418, three wire types of the seventh cross-wire segment 417, three wire types of the sixth cross-wire segment 416, and four wire types of the first cross-wire segment 411, the second cross-wire segment 412, and the third cross-wire segment 413. Therefore, in the U-phase winding shown in FIG. 15, there are 15 wire types of Upin hairpin wires.

Each Upin hairpin wire includes a flat wire 21 accommodated in a stator slot 11 and a cross-layer cross-wire segment 41 and a cross-layer welding segment 42 that are located outside the stator slot 11. Each Upin hairpin wire has two flat wires 21 accommodated in stator slots 11, and the two flat wires 21 are respectively inserted into two different stator slots 11. The Upin hairpin wire connects the two flat wires 21 through the cross-layer cross-wire segment 41.

In the embodiment shown in FIG. 15, Upin hairpin wires at the layers are independent of each other, there is no need for an additional cross-layer hairpin wire, and fully automatic wire insertion is implemented by using independent wire cups, thereby simplifying a manufacturing process and facilitating mass production.

In the embodiment shown in FIG. 8 of this application, both a flat wire distribution manner of the W-phase winding and a flat wire distribution manner of the V-phase winding are the same as a flat wire distribution manner of the U-phase winding. Therefore, in the embodiment shown in FIG. 15, both a flat wire connection manner of the W-phase winding and a flat wire connection manner of the V-phase winding are the same as a flat wire connection manner of the U-phase winding, and the flat wire connection manner of the W-phase winding and the flat wire connection manner of the V-phase winding may be obtained by translating the flat wire connection manner of the U-phase winding. Details are not described herein in this application.

FIG. 16 is a connection diagram 4 of the U-phase winding in FIG. 8. A wave winding connection manner of the U-phase winding in the embodiment shown in FIG. 16 is the same as the wave winding connection manner of the U-phase winding in the embodiment shown in FIG. 15. Details are not described herein in this application. Different from the embodiment shown in FIG. 15, in the embodiment shown in FIG. 16, a lead-in wire 71 and a lead-out wire 72 of the U-phase winding are located at the welding end 62 of the stator winding 2.

In the U-phase winding, a cross-layer cross-wire segment 41 used to connect two first flat wires 211 in a same circle of flat wires is a first cross-wire segment 411. A cross-layer cross-wire segment 41 used to connect two second flat wires 212 in a same circle of flat wires is a second cross-wire segment 412. A cross-layer cross-wire segment 41 used to connect two third flat wires 213 in a same circle of flat wires is a third cross-wire segment 413.

In the U-phase winding, a cross-layer welding segment 42 used to connect two first flat wires 211 in a same circle of flat wires is a first welding segment 421. A cross-layer welding segment 42 used to connect two second flat wires 212 in a same circle of flat wires is a second welding segment 422. A cross-layer welding segment 42 used to connect two third flat wires 213 in a same circle of flat wires is a third welding segment 423. A cross-layer welding segment 42 used to connect two third flat wires 213 in different circles of flat wires is a sixth welding segment 426. A cross-layer welding segment 42 used to connect one first flat wire 211 and one second flat wire 212 in different circles of flat wires is a seventh welding segment 427. A cross-layer welding segment 42 used to connect one first flat wire 211 and one second flat wire 212 in a same circle of flat wires is an eighth welding segment 428.

In some embodiments, in the same circle of flat wires, a number of stator slots crossed by the first cross-wire segment 411, a number of stator slots crossed by the second cross-wire segment 412, and a number of stator slots crossed by the third cross-wire segment 413 are the same, and in the same circle of flat wires, wire types of the first cross-wire segment 411, the second cross-wire segment 412, and the third cross-wire segment 413 are the same. This helps reduce a number of wire types of the flat wires 21, and simplify a structure of the stator winding 2 and a manufacturing process of the stator winding 2.

Refer to FIG. 16. The number of stator slots crossed by the first cross-wire segment 411, the number of stator slots crossed by the second cross-wire segment 412, and the number of stator slots crossed by the third cross-wire segment 413 in the same circle of flat wires are all 5.

Compared with a flat wire motor whose number of slots per pole per phase is 2, the flat wire motor provided in this application reduces the numbers of stator slots crossed by the first cross-wire segment 411, the second cross-wire segment 412, and the third cross-wire segment 413, so that an end portion length of the stator winding 2 is reduced. The end portion length of the stator winding 2 is a dimension, in the axial direction of the motor stator 101, of an end portion that is of the stator winding 2 and that is exposed to the stator core 1.

In some embodiments, in the same circle of flat wires, wire types of the first cross-wire segment 411, the second cross-wire segment 412, and the third cross-wire segment 413 are the same, but wire types of first cross-wire segments 411 of different circles of flat wires are different, wire types of second cross-wire segments 412 of different circles of flat wires are different, and wire types of third cross-wire segments 413 of different circles of flat wires are different. Therefore, in the U-phase winding in FIG. 16, there are four wire types of the first cross-wire segment 411, the second cross-wire segment 412, and the third cross-wire segment 413.

In the embodiment shown in FIG. 16, there are four wire types of the first cross-wire segment 411, the second cross-wire segment 412, and the third cross-wire segment 413. Therefore, there are four wire types of Upin hairpin wires of the U-phase winding.

Each Upin hairpin wire includes a flat wire 21 accommodated in a stator slot 11 and a cross-layer cross-wire segment 41 and a cross-layer welding segment 42 that are located outside the stator slot 11. Each Upin hairpin wire has two flat wires 21 accommodated in stator slots 11, and the two flat wires 21 are respectively inserted into two different stator slots 11. The Upin hairpin wire connects the two flat wires 21 through the cross-layer cross-wire segment 41.

In the embodiment shown in FIG. 16, Upin hairpin wires at the layers are independent of each other, there is no need for an additional cross-layer hairpin wire, and fully automatic wire insertion is implemented by using independent wire cups, thereby simplifying a manufacturing process and facilitating mass production.

In some embodiments, in the U-phase winding, a same-layer connection segment 5 used to connect the 8^{th} layer of flat wires of the 34^{th} stator slot and the 8^{th} layer of flat wires of the 2^{nd} stator slot is located at the welding end of the stator winding 2. In the embodiment shown in FIG. 15, the same-layer connection segment 5 crosses four stator slots.

In some embodiments, in the U-phase winding, a number of stator slots crossed by the first welding segment 421, a number of stator slots crossed by the second welding segment 422, a number of stator slots crossed by the third welding segment 423, and a number of stator slots crossed by the sixth welding segment 426 are the same. This facilitates more orderly wiring at the welding end 62 of the stator winding 2, and facilitates structure symmetry of the stator winding 2, to improve NVH performance of the flat wire motor.

In the embodiment shown in FIG. 16, the number of stator slots crossed by the first welding segment 421, the number of stator slots crossed by the second welding segment 422, the number of stator slots crossed by the third welding segment 423, and the number of stator slots crossed by the sixth welding segment 426 are all 4.

In some embodiments, a difference between a number of stator slots crossed by the seventh welding segment 427 and the number of stator slots crossed by the first welding segment 421 is 1. A difference between a number of stator slots crossed by the eighth welding segment 428 and the number of stator slots crossed by the first welding segment 421 is 1. Connections between flat wires 21 in a same circle of flat wires have different spans. This helps form a short-pitch winding, thereby reducing a harmonic winding factor and improving NVH performance of the flat wire motor.

In the embodiment shown in FIG. 16, the number of stator slots crossed by the first welding segment 421 is 4, the number of stator slots crossed by the seventh welding segment 427 is 3, and the number of stator slots crossed by the eighth welding segment 428 is 5.

In the embodiment shown in FIG. 8 of this application, both a flat wire distribution manner of the W-phase winding and a flat wire distribution manner of the V-phase winding are the same as a flat wire distribution manner of the U-phase winding. Therefore, in the embodiment shown in FIG. 16, both a flat wire connection manner of the W-phase winding and a flat wire connection manner of the V-phase winding are the same as a flat wire connection manner of the U-phase winding, and the flat wire connection manner of the W-phase winding and the flat wire connection manner of the V-phase winding may be obtained by translating the flat wire connection manner of the U-phase winding. Details are not described herein in this application.

In the embodiments shown in FIG. 12 and FIG. 16, the same-layer connection segment 5 is located at the 8^{th} layer, the lead-in wire 71 and the lead-out wire 72 are located at the 1^{st} layer, and after the first flat wire 211 of each circle of flat wires is connected in a traversal manner, the second flat wire 212 is connected in a traversal manner. In some embodiments, the same-layer connection segment 5 is located at the 1^{st} layer, and the lead-in wire 71 and the lead-out wire 72 are located at the 8^{th} layer. In some other embodiments, after the second flat wire 212 of each circle of flat wires is connected in a traversal manner, the first flat wire 211 is connected in a traversal manner.

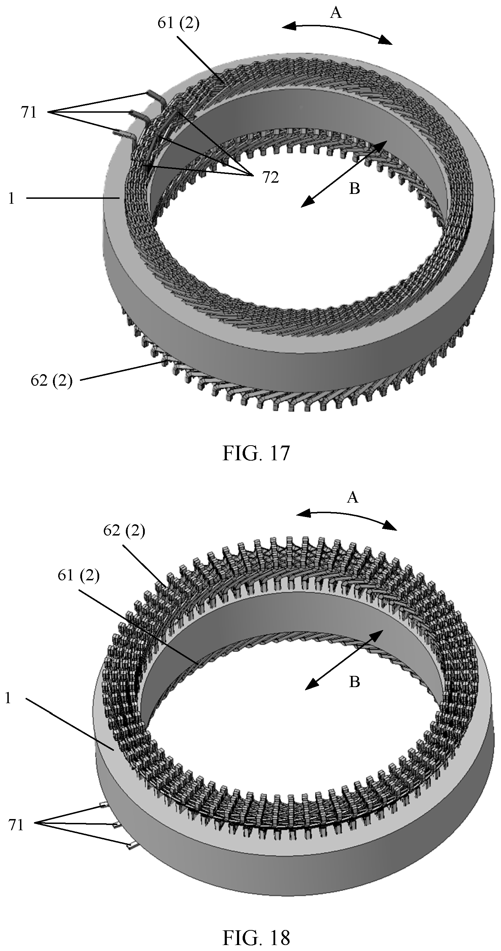

FIG. 17 is a diagram of a structure of a crown end of a motor stator according to an embodiment of this application. FIG. 18 is a diagram of a structure of a welding end of a motor stator according to an embodiment of this application.

In the embodiments shown in FIG. 17 and FIG. 18, a three-phase winding is formed through connection in the winding manner shown in FIG. 9. Refer to FIG. 17 and FIG. 18. The three-phase winding is arranged orderly. The three-phase winding includes three lead-in wires 71 and three lead-out wires 72. In the radial direction of the motor stator, the three lead-in wires 71 of the three-phase winding are located at outermost layers of different stator slots 11, that is, the 1^{st} layer of the stator slot 11 shown in FIG. 9. In the radial direction (the direction B in FIG. 17 and FIG. 18) of the motor stator, the three lead-out wires 72 of the three-phase winding are located at an innermost layer in the radial direction of the motor stator, that is, the 8^{th} layer of the stator slot 11 shown in FIG. 9.

A distance between the three lead-out wires 72 in the circumferential direction (the direction A in FIG. 17 and FIG. 18) of the motor stator is relatively small, and the radial space of the motor stator 101 is fully utilized, so that a structure of a busbar is simplified, and an entire structure is convenient to be arranged. In some embodiments, ends of the three lead-out wires 72 are directly connected, and an integral injection molding busbar may be canceled, to reduce costs and a weight of the flat wire motor.

FIG. 7, FIG. 9, FIG. 17, and FIG. 18 show a connection manner of a three-phase winding with 36 slots, 8 poles, and 8 layers, and are also applicable to a connection manner of a three-phase winding with 72 slots, 16 poles, and 8 layers. In this application, an example in which the three-phase winding with 72 slots, 16 poles, and 8 layers uses the winding manner in FIG. 7 and FIG. 9 is used. Comparison is performed with harmonic winding factors of various orders of a full-pitch winding (72 slots, 12 poles, and 8 layers) whose number q of slots per pole per phase is 1, a short-pitch winding (72 slots, 12 poles, and 8 layers) whose number q of slots per pole per phase is 1, a full-pitch winding (72 slots, 24 poles, and 8 layers) whose number q of slots per pole per phase is 2, and a short-pitch winding (72 slots, 24 poles, and 8 layers) whose number q of slots per pole per phase is 1.

Table 1 is a table of comparison between harmonic winding factors of various orders of this embodiment (an embodiment in which the three-phase winding with 72 slots, 16 poles, and 8 layers uses the winding manner in FIG. 7 and FIG. 9) of this application, the full-pitch winding (72 slots, 12 poles, and 8 layers) whose number q of slots per pole per phase is 1, the short-pitch winding (72 slots, 12 poles, and 8 layers) whose number q of slots per pole per phase is 1, the full-pitch winding (72 slots, 24 poles, and 8 layers) whose number q of slots per pole per phase is 2, and the short-pitch winding (72 slots, 24 poles, and 8 layers) whose number q of slots per pole per phase is 1.

**Table 1**

| Harmonic order | q=1 full-pitch winding | q=2 full-pitch winding | q=1 short-pitch winding | q=2 short-pitch winding | Embodiments of this application |
|---|---|---|---|---|---|
| 1 | 0.9659 | 1 | 0.9012 | 1 | 0.9452 |
| 5 | 0.2588 | 1 | 0.0173 | 1 | 0.1398 |
| 7 | 0.2588 | 1 | 0.0173 | 1 | 0.0607 |
| 11 | 0.9659 | 1 | 0.9012 | 1 | 0.0607 |
| 13 | 0.9659 | 1 | 0.9012 | 1 | 0.1398 |
| 17 | 0.2588 | 1 | 0.0173 | 1 | 0.9452 |
| 19 | 0.2588 | 1 | 0.0173 | 1 | 0.9452 |
| 23 | 0.9659 | 1 | 0.9012 | 1 | 0.1398 |
| 25 | 0.9659 | 1 | 0.9012 | 1 | 0.0607 |

It can be learned through comparison from Table 1 that the winding factor in this embodiment (an embodiment in which the three-phase winding with 72 slots, 16 poles, and 8 layers uses the winding manner in FIG. 7 and FIG. 9) of this application is compared with winding factors of the full-pitch winding whose number q of slots per pole per phase is 1 and the full-pitch winding whose number q of slots per pole per phase is 2. In embodiments of this application, the 5^{th}-order harmonic, the 7^{th}-order harmonic, the 11^{th}-order harmonic, the 11^{th}-order harmonic, the 23^{rd}-order harmonic, and the 25^{th}-order harmonic of the three-phase winding are all weakened, so that a high-order harmonic suppression effect is better, torque ripple performance is better, and rotor skewing complexity is reduced, to improve NVH performance.

The winding factor in this embodiment (an embodiment in which the three-phase winding with 72 slots, 16 poles, and 8 layers uses the winding manner in FIG. 7 and FIG. 9) of this application is compared with winding factors of the short-pitch winding whose number q of slots per pole per phase is 1 and the short-pitch winding whose number q of slots per pole per phase is 2. In embodiments of this application, a fundamental harmonic winding factor is larger, and costs are more favorable.

In the embodiments shown in FIG. 7 to FIG. 16, each phase winding of the stator winding in this application is a single-branch even-numbered-layer winding, and both the crown end 61 and the welding end 62 of the stator winding 2 can lead out a wire. In addition, the Upin hairpin wire has a small number of wire types, and the stator winding 2 has a simple structure, so that winding design flexibility is improved.

A number of slots per pole per phase of the stator winding is 1.5, and the stator winding is a fractional slot winding. A fundamental factor of the winding is high, and a harmonic factor is low. The 5^{th}-order harmonic, the 7^{th}-order harmonic, the 11^{th}-order harmonic, the 11^{th}-order harmonic, the 23^{rd}-order harmonic, and the 25^{th}-order harmonic of the winding can all be weakened, thereby improving NVH performance. In each phase winding, flat wires 21 are evenly distributed at different positions in a stator slot 11 at each pole, back electromotive forces and currents of the phase windings are completely the same, and there is no circulating current between branches, thereby ensuring temperature uniformity of the winding, avoiding an NVH problem, and further improving a service life of the motor. The lead-out wires 72 of the phases are located at the same layer, the lead-out wires 72 of the phases can make full use of the radial space, and the star points of the phases are close to each other, thereby simplifying a busbar structure and reducing an end portion height. Upin hairpin wires at the layers are independent of each other, there is no additional cross-layer hairpin wire, and fully automatic wire insertion can be implemented by using independent wire cups, thereby simplifying a manufacturing process and facilitating mass production.

The foregoing is merely specific implementations of this application. However, the protection scope of this application is not limited thereto. Any change or replacement within the technical scope disclosed in this application shall fall within the protection scope of this application. Therefore, the protection scope of this application shall be subject to the protection scope of the claims.

## Claims

1. A flat wire motor, wherein a motor stator of the flat wire motor comprises a plurality of stator slots, the plurality of stator slots are arranged at intervals in a circumferential direction of the motor stator, each stator slot is configured to accommodate a plurality of flat wires, the plurality of flat wires in each stator slot are sequentially arranged in a layered manner in a radial direction of the motor stator, and the flat wires in the plurality of stator slots are arranged into a plurality of circles of flat wires in the radial direction of the motor stator, wherein
each circle of flat wires comprises a plurality of groups of flat wires sequentially arranged in the circumferential direction of the motor stator, each group of flat wires is configured to transmit a same-phase alternating current, and two adjacent groups of flat wires in the circumferential direction of the motor stator are respectively configured to transmit alternating currents of different phases; and
each group of flat wires comprises a first layer of flat wires and a second layer of flat wires that are adjacently arranged in the radial direction of the motor stator, the first layer of flat wires comprises two flat wires, the two flat wires of each first layer of flat wires are arranged at a same layer of two adjacent stator slots in a one-to-one manner, the second layer of flat wires comprises one flat wire, and the one flat wire of the second layer of flat wires in each group of flat wires and one of the flat wires of the first layer of flat wires in the same group of flat wires are located in a same stator slot.

2. The flat wire motor according to claim 1, wherein the two flat wires of the first layer of flat wires in each group of flat wires in the plurality of circles of flat wires are connected to two flat wires of the first layer of flat wires in another group of flat wires in the plurality of circles of flat wires through two cross-layer connection segments in a one-to-one manner; and
the two cross-layer connection segments are located at an end in an axial direction of the motor stator, and two flat wires connected to each cross-layer connection segment are respectively arranged at different layers.

3. The flat wire motor according to claim 2, wherein two flat wires of the first layer of flat wires in at least a part of the plurality of groups of flat wires in the plurality of circles of flat wires are connected to two flat wires of the first layer of flat wires in another group of flat wires in the plurality of circles of flat wires through two cross-layer connection segments with a same length in a one-to-one manner.

4. The flat wire motor according to claim 3, wherein the cross-layer connection segments for connecting any two first layers of flat wires in a same circle of flat wires cross a same number of stator slots.

5. The flat wire motor according to claim 3 or 4, wherein the cross-layer connection segments for connecting two first layers of flat wires in two adjacent circles of flat wires cross a same number of stator slots.

6. The flat wire motor according to claim 2, wherein the first layer of flat wires in one of the plurality of groups of flat wires configured to transmit a same-phase alternating current in each circle of flat wires are connected to the first layers of flat wires in two groups of flat wires through two cross-layer connection segments with different lengths in a one-to-one manner, and the two groups of flat wires are respectively located in two adjacent circles of flat wires.

7. The flat wire motor according to claim 6, wherein a difference between numbers of stator slots crossed by the two cross-layer connection segments with the different lengths is 1.

8. The flat wire motor according to any one of claims 2 to 7, wherein the second layer of flat wires in each group of flat wires in the plurality of circles of flat wires is connected to the second layer of flat wires in another group of flat wires in the plurality of circles of flat wires through one cross-layer connection segment, and the two second layers of flat wires connected to the one cross-layer connection segment are respectively arranged at different layers; and
the first layer of flat wires and the second layer of flat wires in each group of flat wires in the plurality of circles of flat wires are connected to corresponding layers of flat wires in different groups of flat wires.

9. The flat wire motor according to claim 8, wherein the cross-layer connection segment connected to the second layer of flat wires in each group of flat wires in the plurality of circles of flat wires crosses a same number of stator slots.

10. The flat wire motor according to claim 9, wherein the number of stator slots crossed by the cross-layer connection segment connected to the second layer of flat wires in each group of flat wires in each circle of flat wires is the same as a number of stator slots crossed by the cross-layer connection segment connected to the first layer of flat wires in each group of flat wires.

11. The flat wire motor according to claim 9, wherein a difference between the number of stator slots crossed by the cross-layer connection segment connected to the second layer of flat wires in each group of flat wires in each circle of flat wires and a number of stator slots crossed by the cross-layer connection segment connected to any flat wire of the first layer of flat wires in one group of flat wires in each circle of flat wires is 1.

12. The flat wire motor according to any one of claims 1 to 11, wherein one flat wire of the first layer of flat wires in one of the plurality of groups of flat wires configured to transmit a same-phase alternating current in one circle of flat wires located at at least one end in an arrangement direction of the plurality of circles of flat wires is connected to the second layer of flat wires in another group of flat wires in the same circle of flat wires through a same-layer connection segment.

13. The flat wire motor according to any one of claims 1 to 12, wherein the plurality of circles of flat wires comprise a first circle of flat wires and a second circle of flat wires, a distance between the first circle of flat wires and an axis of the motor stator is greater than a distance between another circle of flat wires and the axis of the motor stator, and a distance between the second circle of flat wires and the axis of the motor stator is less than a distance between another circle of flat wires and the axis of the motor stator, wherein
a difference between a number of stator slots crossed by a same-layer connection segment for connecting the first layer of flat wires and the second layer of flat wires in the first circle of flat wires and a number of stator slots crossed by a same-layer connection segment for connecting the first layer of flat wires and the second layer of flat wires in the second circle of flat wires is 1.

14. A powertrain, wherein the powertrain comprises a reducer and the flat wire motor according to any one of claims 1 to 13, and the flat wire motor is in transmission connection to the reducer.

15. A vehicle, wherein the vehicle comprises wheels and the powertrain according to claim 14, and the powertrain is configured to drive the wheels.
